Europäisches Patentamt

European Patent Office

Office européen des brevets

(19)

(11) EP 0 697 160 B1

(12) FASCICULE DE BREVET EUROPEEN

(45) Date de publication et mention
de la délivrance du brevet:
**24.02.1999  Bulletin 1999/08**

(21) Numéro de dépôt: **94914446.3**

(22) Date de dépôt: **26.04.1994**

(51) Int Cl.6: **H04N 13/02**

(86) Numéro de dépôt international:
**PCT/FR94/00472**

(87) Numéro de publication internationale:
**WO 94/26071 (10.11.1994 Gazette 1994/25)**

(54) **DISPOSITIF VIDEO AUTOSTEREOSOPIQUE**

AUTOSTEREOSKOPISCHES VIDEOGERÄT

AUTOSTEREOSCOPIC VIDEO DEVICE

(84) Etats contractants désignés:
**DE ES FR GB IT NL SE**

(30) Priorité: **05.05.1993  FR 9305380**
**05.05.1993  FR 9305381**
**05.05.1993  FR 9305384**

(43) Date de publication de la demande:
**21.02.1996  Bulletin 1996/08**

(60) Demande divisionnaire: **98110532.3 / 0 876 066**
**98110519.0 / 0 876 065**

(73) Titulaire: **ALLIO, Pierre**
**F-75020 Paris (FR)**

(72) Inventeur: **ALLIO, Pierre**
**F-75020 Paris (FR)**

(74) Mandataire: **Jacquard, Philippe Jean-Luc et al**
**CABINET ORES,**
**6, Avenue de Messine**
**75008 Paris (FR)**

(56) Documents cités:
**EP-A- 0 084 998          FR-A- 1 362 617**

• **PATENT ABSTRACTS OF JAPAN vol. 14, no. 195**
**(P-1039) 20 Avril 1990 & JP,A,02 039 034**
**(NIPPON TELEGR & TELEPH CORP NTT ) 8**
**Février 1990**
• **JAPANESE JOURNAL OF APPLIED PHYSICS,**
**vol.16, no.7, Juillet 1977, TOKYO JP pages 1269**
**- 1270 M. UEDA & H. NAKAYAMA 'TV**
**transmission of three-dimensional scenes by**
**using fly's eye lenses'**

# Description

La présente invention a pour objet un dispositif vidéo autostéréoscopique à caméra unique et mettant en oeuvre un réseau lenticulaire cylindrique.

On connaît du brevet des Etats-Unis US-3 932 699, un dispositif de prise de vue autostéréoscopique, et présentant un réseau lenticulaire sur lequel sont focalisés les rayons lumineux issus d'un objet, le réseau lenticulaire étant plaqué contre une fenêtre sensible à la lumière faisant partie par exemple d'un tube Vidicon.

Un tel dispositif de prise de vue présente de nombreux inconvénients, en particulier, une distorsion géométrique importante et une faible profondeur de champ.

Un dispositif de prise de vue stéréoscopique beaucoup plus élaboré a été proposé par Mc CORMICK et ses collaborateurs au colloque sur la télévision stéréoscopique qui s'est tenu à Londres le 15.10.92. Il a proposé de réaliser une prise de vue vidéo stéréoscopique en enregistrant une image qui est projetée sur un écran diffusant par un double réseau lenticulaire autocollimaté. Ce dispositif présente l'inconvénient d'une complexité importante et notamment la mise en oeuvre de trois réseaux lenticulaires qui doivent être parfaitement alignés faute de quoi l'image serait affectée de phénomènes de moiré extrêmement gênants.

Selon un premier aspect, la présente invention a pour objet un dispositif de prise de vue autostéréoscopique ne présentant pas les inconvénients précités et plus particulièrement un dispositif de prise de vue stéréoscopique conciliant à la fois simplicité de mise en oeuvre et qualité optique élevée.

Le brevet français FR 1 362 617 (YARMONKINE) a pour objet un dispositif de prise de vue présentant plusieurs objectifs d'entrée, à savoir deux lentilles, présentant chacune un axe optique, d'où deux objectifs d'entrée et deux axes optiques correspondant chacun à un point de vue. Pour obtenir une image composite présentant un interlignage, un dépoli est placé sur la face plane de la plaque 7 et ce dépoli est balayé horizontalement par une caméra normale. Ce dépoli introduit des pertes d'intensité lumineuse et de contraste. En outre, étant donné que les micro-lentilles du réseau 7 doivent avoir un angle de champ leur permettant de voir les deux lentilles de l'objectif d'entrée, certains des rayons lumineux sont très inclinés sur l'axe optique, d'où des problèmes de vignettage.

L'idée de base de l'invention est de mettre en oeuvre un objectif d'entrée unique, et un seul axe optique, tout en permettant, en l'absence de dépoli, une image autostéréoscopique présentant deux points de vue ou plus. L'invention concerne dans ce but, un dispositif de prise de vue autostéréoscopique à caméra unique et mettant en oeuvre un réseau lenticulaire cylindrique, caractérisé en ce qu'il comporte successivement :

a) un seul objectif d'entrée présentant un seul axe optique

b) ledit réseau lenticulaire qui est disposé sensiblement dans un plan focal image de l'objectif d'entrée, ledit réseau ayant une distance focale telle que, pour une surface image égale au pas des lentilles qui le compose, l'image de la pupille d'entrée de l'objectif d'entrée ait une largeur nominale égale audit pas,

c) une optique de reprise de grossissement inférieur à l'unité,

d) et un capteur d'images,

l'optique de reprise renvoyant les rayons émergeant du réseau lenticulaire sur le capteur d'images, l'image du réseau lenticulaire dans l'optique de reprise étant telle que le pas des lentilles du réseau lenticulaire y correspond à un nombre entier de points images (pixels) du capteur d'images, et l'image de la pupille de l'objectif d'entrée étant, en l'absence de réseau lenticulaire, située sensiblement à la pupille de l'optique de reprise.

Ce dispositif permet en particulier, grâce à l'optique de reprise orthoscopique, de conserver une base stéréoscopique correspondant au diamètre de la pupille d'entrée de l'objectif d'entrée malgré la réduction du format de l'image sur le capteur. En outre, le dispositif de prise de vue selon l'invention ne met en oeuvre qu'un seul réseau lenticulaire, ce qui est particulièrement favorable à sa qualité optique.

Le capteur d'image peut être un capteur du type à couplage de charges, et de préférence constitué par un ensemble de trois capteurs individuels associés à une optique prismatique de séparation trichrome formant sur les trois capteurs des images nominalement alignées entre elles, point image à point image. Ceci permet d'obtenir une séparation élevée entre les points de vue sans avoir à diviser la pupille d'entrée en autant de sous-pupilles.

Une séparation optimale entre les points de vue est obtenue en orientant le réseau lenticulaire dans le sens des lignes du capteur d'image. On notera que cette orientation correspond à une rotation de 90° par rapport à la position normale, étant donné que l'orientation d'un réseau lenticulaire doit être telle qu'elle permette une séparation horizontale entre les points de vue.

L'objectif d'entrée peut comporter une lentille d'entrée dont la pupille est sensiblement égale à 100 mm.

Le réseau lenticulaire peut présenter un pas de 0,4 mm.

L'optique de reprise peut avantageusement avoir un grossissement sensiblement égal à 0,1.

L'optique de reprise peut présenter un diaphragme circulaire, en particulier du type à iris. Ce diaphragme est équivalent à un diaphragme en forme de fente horizontale disposé dans le premier objectif, mais il est nettement plus facile à positionner mécani-

Un système vidéo autostéréoscopique peut comporter un dispositif de prise de vue tel que défini ci-dessus, ce dispositif étant dans la revendication 1.

Selon son premier aspect, l'invention concerne également un procédé de réglage d'un dispositif tel que défini ci-dessus, ce procédé étant dans la revendication 12.

Le Brevet français FR 1 362 617 précité ne décrit pas de procédé de réglage. S'il est fait allusion dans ce document à des images plates placées côte à côte, celles-ci sont produites sans réseau lenticulaire et elles ne sont donc pas utilisables pour réaliser un tel réglage.

Selon un deuxième aspect, l'invention concerne un procédé de transmission et/ou d'enregistrement d'image stéréoscopique en particulier à caméra unique réalisé à l'aide d'un réseau lenticulaire cylindrique.

Il a été constaté par la demanderesse que la transmission par un canal de transmission (émetteur, etc) ou l'enregistrement direct de telles images obtenues à la sortie du capteur CCD 21, ne permettait pas la reproduction des images avec une perception satisfaisante des reliefs.

La demanderesse a pu identifier que l'origine de ce problème intervenant lors d'un transfert de l'image, était dû au fait que l'information de relief du images était une information hautes fréquences, c'est-à-dire située dans la partie supérieure dans la bande des fréquences vidéo. Or, il est bien connu, que les magnétoscopes, même de type professionnel, ont tendance à dégrader ce type d'information. En outre, les magnétoscopes grand public présentent une bande passante vidéo qui ne s'étend guère au-delà de 3 MHz, pour une bande passante vidéo nominale de 5 MHz. De même, les canaux de transmission (réseaux d'émetteur terrestres ou par satellite, ou bien réseaux câblés) présentent également le même type de dégradation.

Il est connu du brevet US 3 674 921 (GOLDSMITH) un dispositif de transmission analogique d'une image vidéo stéréoscopique qui comporte deux images élémentaires, à savoir une image gauche LE et une image droite RE générées par deux caméras distinctes 21 et 23. Il ne s'agit donc pas d'images autostéréoscopiques. La transmission s'effectue en conservant une des deux images et en extrayant un signal haute fréquence de disparité qui est ensuite filtrée. Pour l'enregistrement, il est fait état de deux images anamorphosées sur film. Pour passer en mode vidéo, il faut tout d'abord les désanamorphoser à l'aide d'un désanamorphoseur, puis les filmer avec une caméra stéréoscopique après quoi l'image est traitée de manière classique.

Selon son deuxième aspect, la présente invention concerne un procédé de transfert, notamment de transmission et/ou d'enregistrement d'images autostéréoscopiques, qui permet d'utiliser des canaux de transmission ou des magnétoscopes d'un type standard, tout en conservant, dans une large mesure, la qualité des images stéréoscopiques.

Dans ce but, l'invention concerne selon le deuxième aspect un procédé de transfert d'images autostéréoscopiques à caméra unique réalisées à l'aide d'un réseau lenticulaire cylindrique, caractérisé en ce qu'il comporte une étape de réalisation d'une image transcodée de ladite image autostéréoscopique, une dite image transcodée comportant une pluralité d'images plates de format anamorphose en nombre égal au nombre de points de vue stéréoscopiques, les images plates de format anamorphosé étant disposées côte à côte, l'image transcodée étant soumise audit transfert, c'est-à-dire à une transmission et/ou un enregistrement.

On notera que le procédé selon l'invention ne fait pas appel à des anamorphoseurs ou à des désanamorphoseurs. Le procédé, au contraire, consiste à désimbriquer l'image autostéréoscopique, pour retrouver les images plates qui présentent normalement un format anamorphosé.

L'image transmise ou enregistrée consiste simplement en une série d'images plates comportant toute l'information de l'image originale et qui sont en elles-mêmes transmises ou enregistrées avec les pertes de qualité qu'introduisent les canaux de transmission et/ou les magnétoscopes classiques. Mais, lors de la réception ou de la lecture, l'image autostéréoscopique reconstituée par transcodage inverse ne sera, de manière surprenante, que très peu affectée par les défauts de transmission en ligne et/ou d'enregistrement. Lors de la restitution stéréoscopique de l'image, l'information stéréoscopique, bien que située au-delà de la bande passante du canal de transmission de l'enregistreur aura été cependant conservée dans une large mesure.

L'image transcodée peut présenter le même format que l'image autostéréoscopique.

Selon un premier mode de réalisation, une étape d'enregistrement est réalisée sur un magnétoscope analogique standard (VHS, SVHS, etc).

Selon un mode de réalisation préféré, l'étape de transfert est réalisé en technique numérique, par exemple, sur une voie satellite et/ou avec un magnétoscope numérique avec application d'un algorithme de compression de débit binaire. En effet, les considérations ci-dessus sont, selon l'invention, également valables en ce qui concerne tout traitement numérique de l'image. La séparation de l'image en une pluralité d'images plates de format anamorphose comportant toute l'information de l'image originale permet de simplifier considérablement tout traitement éventuel de compression de débit binaire, étant donné que les composantes hautes fréquences de l'image comportant l'information stéréoscopique sont ipso facto supprimées dans une large mesure. L'algorithme de compression peut être en particulier un algorithme de vectorisation connu en soi. De nombreux types d'algorithmes sont connus, pour la compression d'images et mettent en oeuvre en général la transformée en cosinus discrète TCD, que ce soit pour des images selon les standards de télévisions traditionnels, que des images, selon des standards dits à haute définition.

La transmission ou l'enregistrement d'images selon l'invention peuvent présenter, pour l'étape de transcodage, une première étape de numérisation de l'image autostéréoscopique, une deuxième étape de mémorisation de l'image transcodée, ledit transcodage étant réalisé par une mémoire de transcodage permettant de réaliser un adressage en écriture d'au moins une mémoire, et une troisième étape de lecture de ladite mémoire.

L'étape de transformation peut comporter une quatrième étape de conversion analogique de l'image transcodée pour permettre une transmission ou un enregistrement analogique de celle-ci.

Ladite mémoire peut être une mémoire de transcodage de pixels, le transcodage étant effectué par permutation des pixels de chaque ligne. La capacité de la mémoire peut être limitée à une seule ligne ou à certaines lignes seulement.

Selon un mode de réalisation préféré, la mémoire de transcodage est telle qu'une image à balayage entrelacée est transformée en image plate anamorphosée à balayage progressif. De la sorte, le confort de la perception du relief est améliorée, en particulier dans le cas où les lignes de l'image stéréoscopique sont verticales, auquel cas, du fait du balayage vertical de l'image d'origine, les points de vue de l'image stéréoscopique s'éteignent en alternance.

La troisième étape de lecture peut être avantageusement réalisée à cadence double de celle de l'image autostéréoscopique.

Selon un mode de réalisation préféré, les opérations de transformation sont réalisées par transcodage direct dans le capteur d'image de la caméra, celui-ci étant pourvu d'une matrice de transcodage, celle-ci étant disposée de préférence entre des colonnes de points images (ou pixels) et un registre à décalage lignes.

Selon son deuxième aspect, l'invention concerne également un système de transfert d'image stéréoscopique caractérisé en ce qu'il comporte :

- un dispositif de génération d'images autostéréoscopiques,
- un premier dispositif de transcodage pour réaliser une image transcodée de ladite image autostéréoscopique, une dite image transcodée comportant une pluralité d'images plates de format anamorphose en nombre égal au nombre de points de vue stéréoscopiques, les images plates de format anamorphosé étant disposées côte-à-côte,
- un dispositif de transfert d'image
- un deuxième dispositif de transcodage pour réaliser une opération de transcodage inverse de celle réalisée par le premier dispositif de transcodage de manière à reconstituer des images autostéroscopiques.

Selon un troisième aspect, l'invention concerne un projecteur vidéo d'images stéréoscopiques comprenant une pluralité de projecteurs vidéo dont chacun projette une image élémentaire représentant un point de vue desdites images stéréoscopiques.

Un projecteur vidéo stéréoscopique est connu de l'article de Chin Hasegawa et collaborateurs intitulé "Three dimensional image technology" publié le 25.07.91 dans le compte-rendu TEC 1991 (Tokyo - Japon).

Il comporte un premier réseau lenticulaire cylindrique en amont d'un écran diffusant, et un deuxième réseau lenticulaire cylindrique en aval de l'écran diffusant.

A chaque lentille cylindrique du premier réseau lenticulaire, correspond un nombre de lignes verticales égal au nombre de points de vue de l'image stéréoscopique. Une telle image ainsi formée sur l'écran diffusant (dépoli) est reprise de manière classique par le deuxième réseau.

Les réseaux ont un pas égal à n fois la taille d'un pixel, n étant le nombre de points de vue. Un inconvénient est que, en raison de son pas élevé, le réseau disposé en aval de l'écran diffusant est très visible, et en outre, il est difficile d'éviter la présence de moirés très désagréables.

Selon un troisième aspect, l'invention concerne un dispositif de projection ne présentant pas l'inconvénient précité.

Selon ce troisième aspect, l'invention concerne un dispositif de projection d'images stéréoscopiques du type précité, caractérisé en ce que le premier et le deuxième réseaux cylindriques ont un pas inférieur ou égal à la moitié de la taille d'un point image ou pixel sur l'écran, et en ce que le pas du deuxième réseau cylindrique est égal ou sensiblement inférieur au pas du premier réseau cylindrique.

De la sorte, la plus haute fréquence de l'image est liée au réseau et est significativement plus élevée que la fréquence pixel initiale, et à travers le premier réseau lenticulaire, le spectateur ne voie pour chaque oeil, qu'un seul point de vue (teinte plate) à la distance nominale d'observation choisie.

Le premier réseau cylindrique peut être une barrière de parallaxe ou un réseau lenticulaire.

Les réseaux peuvent, selon un mode de réalisation préféré, présenter une distance focale et un pas tels qu'un spectateur placé à une distance nominale donnée de l'écran voit une teinte plate.

Le dispositif de projection selon l'invention peut comporter un dispositif de conversion pour transformer une image transcodée comportant une pluralité d'images plates de format anamorphosé en nombre égal au nombre de points de vue, et disposées côte à côte, en une pluralité de dites images élémentaires désanamorphosées, et en ce que le dispositif de conversion comporte des sorties pour lesdites images élémentaires, lesquelles sont couplées à des entrées respectives des projecteurs vidéo. Le dispositif de conversion peut comporter, selon un mode de réalisation préféré, un dispositif d'interpolation de telle sorte que les images plates sont désanamorphosées avec interposition de pixels intermédiaires, par exemple calculées par interpolation, de manière à augmenter la résolution de l'image.

Un système vidéo autostéréoscopique peut incorporer un dispositif de projection d'image tel que défini ci-dessus. Il est caractérisé en ce qu'il comporte :

- un dispositif de génération d'images autostéréoscopiques
- un dispositif de transcodage d'image pour transcoder les images autostéréoscopiques en une pluralité d'images élémentaires et les désanamorphoser
- et un dispositif de projection selon une des revendications 1 à 4.

D'autres caractéristiques et avantages de l'invention appraitront mieux à la lecture de la description qui va suivre, donnée à titre d'exemple non limitatif, en liaison avec les dessins qui représentent :

- la figure 1, un dispositif de prise de vue selon l'art antérieur d'un brevet US-3 932 699,
- la figure 2, un dispositif de prise de vue constitué par l'article de Mc CORMICK précité,
- la figure 3a, un dispositif de prise de vue selon l'invention, et les figures 3b et 3c, selon un mode de réalisation préféré de l'invention,
- la figure 4 représente un synoptique général d'un dispositif de transcodage d'images permettant de réaliser un nombre important de transcodages différents,
- la figure 5 illustre l'adressage de la mémoire d'image à partir d'une mémoire ligne de transcodage d'une mémoire pixel de transcodage, dans le cas d'une image entrelacée, et
- la figure 6, dans le cas d'une image progressive,
- la figure 7, représente un module de transcodage convenant à une entrée en 25 images entrelacées et une sortie en 25 images entrelacées,
- la figure 8, un module de transcodage correspondant à une entrée à 25 images entrelacées, et une sortie à 50 images progressives avec un traitement sur les points images pixels,
- la figure 9, un module de transcodage permettant une entrée à 25 images entrelacées, une sortie à 25 images entrelacées avec un traitement des lignes,
- la figure 10, un module de transcodage convenant au traitement d'une entrée en 25 images entrelacées et une sortie en 50 images progressives avec un traitement selon les lignes,
- la figure 11, un tableau d'adressage des lignes des pixels correspondant à un mode n = 4 images selon les pixels en images entrelacées,

- la figure 12, l'adressage d'une mémoire pixel de transcodage correspondant à une sortie en mode entrelacé ou progressif,
- la figure 13, un tableau illustrant un mode N images en lignes avec un pas de 4 en mode entrelacé,
- la figure 14, une mémoire ligne de transcodage corresponant au cas de la figure 13,
- la figure 15, un tableau illustrant un mode N images en ligne avec un pas de 4 en mode progressif,
- la figure 16, un tableau d'adressage d'une mémoire ligne de transcodage correspondant au cas de la figure 15,
- la figure 17, un tableau correspondant à une entrée N images en mode pixel à pas de 4 avec une sortie en mode relief selon le même cas, pour réaliser une sortie en relief inversé,
- la figure 18, un tableau d'adressage d'une mémoire pixel de transcodage pour obtenir un mode relief à partir d'une entrée en mode N images avec une sortie en mode entrelacé ou progressif,
- la figure 19, un tableau illustrant une entrée en mode N images selon les lignes avec une sortie entrelacée en mode relief selon un pas N = 4,
- la figure 20, un tableau d'adressage d'une mémoire ligne de transcodage avec une entrée en mode N images et une sortie en mode relief pour une image entrelacée,
- la figure 21, un tableau d'adressage d'une mémoire ligne de transcodage avec une entrée en mode N images et une sortie en mode relief pour une image de type progressif, en particulier 50 images/seconde,
- la figure 22, un tableau correspondant à une entrée en mode image et une sortie en mode relief en mode progressif,
- la figure 23, un capteur à couplage de charge agencé pour réaliser un transcodage sur les colonnes de pixels,
- la figure 24, un capteur de couplage de charge pour réaliser un transcodage selon un registre à décalage ligne par ligne,
- la figure 25a, l'illustration d'un dispositif de projection (ou de rétroprojection) selon l'invention,
- la figure 25b, un schéma illustrant la condition d'obtention d'une teinte plate,
- la figure 26, un module de sortie permettant l'alimentation d'un dispositif de projection de la figure 25 à partir d'images plates de format anamorphosé et interposition de pixels intermédiaires pour augmenter la résolution,
- la figure 27 illustre un schéma d'adressage des interpolateurs pour chacun des projecteurs,
- la figure 28, un tableau d'adressage d'une mémoire pixel de transcodage pour une entrée en mode N images pas de 4, une sortie en mode N images pas de 4 avec transcodage et interpolation.

Comme le montre l'analyse précitée de l'art antérieur, il existe actuellement deux types principaux de prise de vue autostéréoscopique, l'un d'une part (brevet US 3 932 699) met en oeuvre un réseau lenticulaire accolé à une caméra vidéo, et l'autre, beaucoup plus élaboré, met en oeuvre une projection sur un écran diffusant d'une image qui est filmée par une caméra vidéo classique.

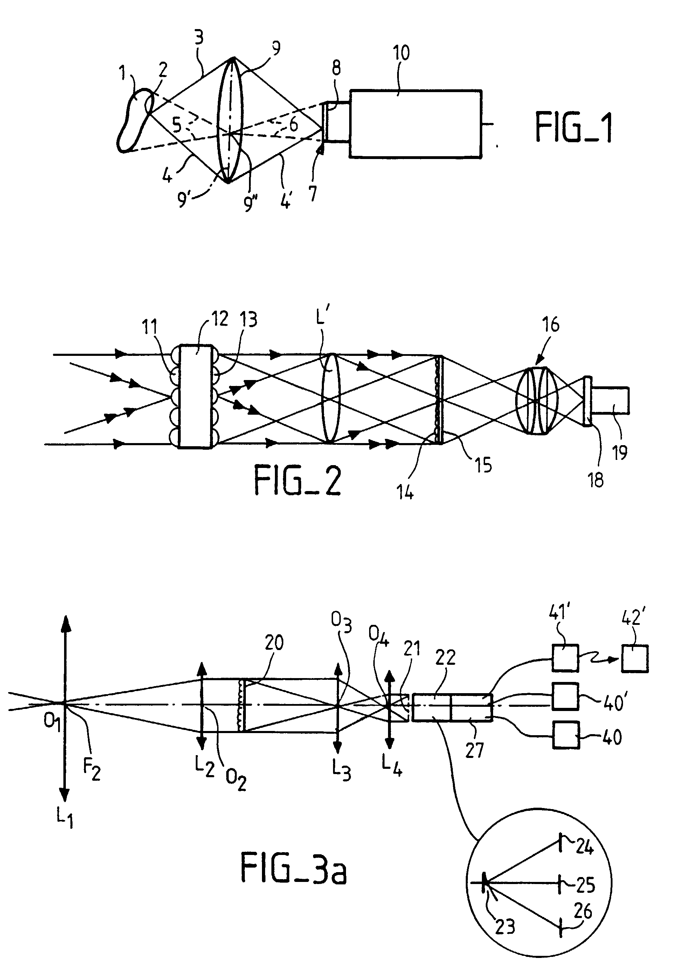

Selon la figure 1, un dispositif de prise de vue selon le brevet US 3 932 699 comporte une caméra 10 à laquelle est associée un objectif 9 qui présente un plan moyen 9'. Un point 2 d'un objet 1 à visualiser émet des rayonnements 3 et 4 reçus par la pleine ouverture de la lentille 9. De la même façon chaque point 9" reçoit de la lumière de tous les points de l'objet 1 (rayon extrême reçu 5 et réémis 6). La lentille 9 est une lentille convergeante positionnée en face d'une surface 8 sensible aux rayonnements de la caméra 10. La caméra peut être par exemple un récepteur de tube Vidicon. Un élément dispersant 7, en particulier, un réseau lenticulaire accolé à l'élément photosensible permet de réaliser, de manière spatialement répétitive, une pluralité d'images élémentaires de la scène à filmer, ce qui permet à la caméra 10 de transmettre une information d'image stéréoscopique. La surface d'entrée de chaque lentille élémentaire constituant le réseau lenticulaire 7 est de section cylindrique d'axe vertical, alors que la surface de sortie de chacun de ces éléments de lentille est plane. Ainsi qu'il a été dit ci-dessus, ce dispositif de prise de vue présente des aberrations géométriques importantes en raison de la nécessité d'une très grande ouverture de l'optique pour conserver une base stéréoscopique suffisante. En outre, un réseau lenticulaire dont les dimensions sont celles d'un capteur vidéo standard est très difficile à réaliser, d'autant plus que sa distance focale doit, quant à elle, être très courte (de l'ordre de 100 microns quasiment incompatible avec une réalisation pratique).

Le système de télévision stéréoscopique qui a été proposé par Mc CORMICK et ses collaborateurs au colloque sur la télévision stéréoscopique (Londres 15.10.92), et qui est résumé dans l'article "Restricted parralax images for 3D TV" est, en ce qui concerne la prise de vue, représenté à la figure 2. Il comporte un écran de transmission autocollimatant 12 présentant deux réseaux cylindriques lenticulaires 11 et 13 accolés, une lentille L' au foyer de laquelle est disposé un écran composé d'une part d'un troisième réseau lenticulaire cylindrique 14 et d'un dépoli 15. L'image stéréoscopique formée sur le dépoli 15 est reprise par une optique 16 et projetée en réduction sur la partie sensible 18 d'un détecteur 19, par exemple un tube VIDICON. Le concept de ce système est de réaliser une prise de vue conventionnelle par une caméra vidéo (16, 18, 19) d'une image projetée sur un écran. Ce dispositif de prise de vue est d'une grande complication, car il met en oeuvre au moins trois réseaux cylindriques lenticulaires qui doivent être parfaitement positionnés géométriquement les uns par rapport aux autres, ainsi qu'une projection sur un écran diffusant, lequel introduit des pertes de rendement lumineux, de résolution et de contraste. Un tel dispositif est en outre sensible aux vibrations et aux variations de température, l'un ou l'autre de ces phénomènes étant susceptible de créer rapidement des moirés dont l'aspect est très désagréable et qui dégradent notablement l'information stéréoscopique.

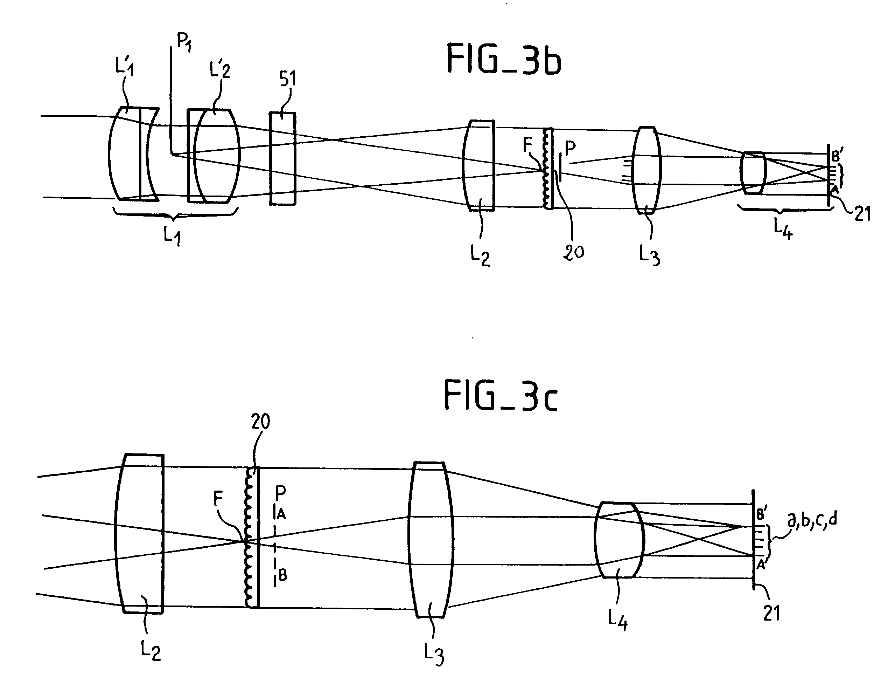

Les figures 3a à 3c décrivent un dispositif de prise de vue selon l'invention. Il se compose des éléments suivants :

1) un objectif d'entrée de préférence télécentrique comportant une lentille d'entrée $L_1$ et une lentille de sortie $L_2$ dont, dans le cas d'un télécentrisme, le foyer $F_2$ est confondu avec le centre optique $O_1$ de la lentille $L_1$. Un tel objectif d'entrée est connu en soi de la demande de brevet européen EP-A-0 84998 (CNRS). Lorsque l'optique est télécentrique, l'image du point central de la pupille d'entrée de la lentille $L_1$ est renvoyée à l'infini par la lentille $L_2$, d'où un parallélisme permettant d'attaquer favorablement le réseau lenticulaire. En particulier, les deux lentilles $L_1$ et $L_2$ peuvent être conjuguées, c'est-à-dire que le foyer $F_1$ de la lentille $L_1$ peut être également confondu avec le centre optique $O_2$ de la lentille $L_2$. L'objectif $L_1$ a par exemple une distance focale de 200 mm et une ouverture à f/2, ce qui correspond à un diamètre utile de pupille de 100 mm, cette distance constituant la base stéréoscopique utile pour la prise de vue. Cette valeur, qui est sensiblement supérieure à l'écartement entre les yeux d'un observateur (ou écart interpupillaire, de l'ordre de 65 mm), est particulièrement favorable pour donner une perspective stéréoscopique réaliste après projection sur un écran.

2) un réseau lenticulaire, de surface d'environ 70 mm/90 mm composé de lentilles élémentaires disposées verticalement et ayant un pas p de 0,4 mm et disposé sensiblement au plan focal de l'objectif d'entrée (en pratique très légèrement à l'aval de celui-ci). Chacune de ces lentilles élémentaires présente une distance focale telle que, pour une surface image égale au pas p d'une microlentille, soit 0,4 mm de large, l'image de la pupille de l'objectif $F_1$ formée à travers chacune de ces lentilles élémentaires soit exactement de 0,4 mm. Ceci permet que toutes les images de pupille formées par chaque lentille élémentaire (ou microlentille) soient exactement jointives entre elles. On notera que le réseau 20 étant composé de lentilles de type cylindrique, les dimensions des images de pupille ne sont bien entendu à considérer que dans le plan horizontal.

3) une optique de reprise de préférence orthoscopique, c'est-à-dire n'induisant pas de déformations de lignes verticales, et pouvant comporter une lentille de champ $L_3$ positionnée en aval du réseau lenticulaire 20 pour renvoyer l'ensemble des rayons lumineux du réseau 20 vers un objectif $L_4$ de reprise

d'image. L'objectif $L_4$, par exemple de distance focale de 25 mm, est monté sur une caméra 22 pourvue de capteurs à couplage de charge. Cette optique de reprise $L_3$, $L_4$ forme une image réelle 21 du réseau lenticulaire 20 immédiatement en amont des capteurs de la caméra 22. Le grossissement de l'optique de reprise $L_3$, $L_4$ est choisi de manière telle que les rayons émergeant du réseau lenticulaire 20 sont renvoyés sur la caméra 22 dans des conditions telles que l'image 21 présente un pas p' correspondant à un nombre entier de points images (pixels) du capteur d'image 22. En outre, la distance entre l'image 21 et le capteur d'image 22, est telle que la mise au point s'effectue sur le ou les capteurs de la caméra 22.

Les éléments de l'objectif d'entrée et de l'optique de reprise sont disposés de manière telle que, en l'absence du réseau lenticulaire, l'image de la pupille de l'objectif d'entrée coïncide sensiblement avec la pupille de l'optique de reprise. Cette condition assure en particulier que, dans le cas où l'objectif d'entrée n'est pas télécentrique, l'optique de reprise assure un rattrapage de parallélisme ainsi qu'il sera précisé par la suite.

En particulier, le capteur 22 intégré dans une caméra 27 peut comporter trois capteurs à couplage de charge 24, 25 et 26 montés sur un ensemble prismatique 23 de séparation trichrome, lesquels sont parfaitement alignés de telle sorte que le premier pixel de la première ligne coïncide pour chaque capteur, et de manière générale, que les images des trois capteurs 24, 25 et 26 se trouvent de la sorte alignées pixel à pixel.

Le signal issu de la caméra 27 peut être envoyé sur un magnétoscope 40' ou sur un moniteur vidéo 40 adapté de manière connue à la visualisation d'images autostéréoscopiques, ou bien être fourni à un émetteur 41' pour être reçu par des récepteurs 42'.

Exemple

Réseau lenticulaire 20 au pas de 0,4 mm et de 1,66 mm de distance focale disposé à 20 mm du centre optique de $L_2$ et à 90 mm du centre optique de $L_3$. La lentille $L_1$ est constituée par un doublet $L'_1$, $L'_2$. Sa pupille est notée $P_1$.

| L1 | Distance focale | f1 = 200 mm |
|----|-----------------|-------------|
| L2 | distance focale | f2 = 300 mm |
| L3 | distance focale | f3 = 230 mm |
| L4 | distance focale | f4 = 25 mm |

- distance $0_1 0_2$ entre les centres optiques des lentilles $L_1$ et $L_2$ $0_1 0_2$ = 180 mm
- distance $0_2 0_3$ entre les centres optiques des lentilles $L_2$ et $L_3$ $0_2 0_3$ = 110 mm
- distance $0_3 0_4$ entre les centres optiques des lentilles $L_3$ et $L_4$ $0_3 0_4$ = 245 mm.

Le système selon l'invention est particulièrement avantageux pour les raisons suivantes.

Pour réaliser un ensemble de prise de vue à trois dimensions, il faut en effet que le système permette d'observer une scène sous différents points de vue dont le nombre est supérieur ou égal à 2, et que chaque point de vue soit suffisamment distant du précédent pour qu'il y ait une différence (ou disparité) notable entre les vues. Lorsque la prise de vue se fait avec un seul objectif, sans mouvement de ces éléments constitutifs dans le plan parallèle au plan image, la totalité du déplacement relatif des axes de prise de vue doit être contenue dans le diamètre horizontal de la pupille de l'objectif qui constitue la base stéréoscopique totale disponible. Dans le cas décrit ci-dessus, la base stéréoscopique totale, ou diamètre horizontal utile de la pupille est égale à 100 mm, soit supérieure à l'écart interpupillaire d'un être humain adulte (environ 65 mm). En vue de l'obtention d'une base stéréoscopique de 10 cm avec un objectif ne présentant pas de défaut notable, et pour que la perspective de la scène filmée ne soit pas différente de celle perçue par un observateur, il a été évalué de manière expérimentale qu'un rapport de l'ordre de 2 entre la distance focale et le diamètre horizontal utile de la pupille donnait les résultats recherchés. Ceci a conduit à utiliser dans l'exemple précité un objectif ayant une lentille $L_1$ de distance focale de 200 mm ouvert à f/2.

La distance focale n'est pas à considérer en tant que telle, car il doit être tenu compte des dimensions de la surface sensible utilisée. Pour une caméra tri-CCD standard munie de capteurs formant une cible de 8,8 mm x 6,6 mm environ, cette distance focale détermine un champ objet très étroit, en fait, plus petit que le dizième du champ (160 mm environ) fourni par la focale "standard" pour une telle surface (soit 16 mm environ). La solution à ce problème qui est de concilier une base stéréoscopique convenable et une focale standard est de séparer ces deux exigences incompatibles en utilisant un premier plan image intermédiaire de surface, par exemple dix fois supérieure. Cette surface est matérialisée par un réseau lenticulaire d'une surface utile de 80 mm x 60 mm. Cette image est reprise par un second objectif de courte focale, par exemple 25 mm, monté sur la caméra afin de faire coïncider l'image formée du réseau avec les capteurs à couplage de charges CCD. La base stéréoscopique ayant jouée son rôle lors de la formation de l'image sur le réseau lenticulaire cylindrique vertical, il devient possible de réduire l'image par reprise aérienne en conservant l'angle de champ objet.

Plus particulièrement, la mise en oeuvre à la fois de l'objectif, de préférence télécentrique, $L_1$, $L_2$ et du dispositif de reprise $L_3$, $L_4$ permet de réaliser une réduction de dimensions, de l'ordre de 10 dans l'exemple précité, la surface utile au premier plan image étant de l'ordre de 60 x 80 mm. Le réseau lenticulaire 20 étant disposé sensiblement au premier plan image de l'optique $L_1$, $L_2$, ceci permet de conserver le bénéfice de la base stéréoscopique de 10 cm malgré la réduction du format de l'image sur le capteur 22. En effet, l'utilisation d'une surface initiale de 60 x 80 mm permet de conjuguer à la fois le champ qui est un peu supérieur à la distance focale standard pour ce format (160 mm) et la large base stéréoscopique égale à 10 cm.

Un autre avantage de l'invention consiste en une plus grande facilité de fabrication et de positionnement du réseau lenticulaire 20. Il est beaucoup plus aisé de fabriquer 1 et a fortiori, un réseau au pas de 0,4 mm que d'en fabriquer 3 de 0,04 mm. Il serait en outre extrêmement difficile de positionner trois micro-réseaux dans les trois capteurs CCD en assurant l'exacte superposition des trois images rouge, verte, bleue ainsi obtenues en tenant compte à la fois des parallélismes des micro-lentilles et des plans images, du pas et de la phase des lentilles tout en conservant la fonctionnalité et la propriété des capteurs. Une telle mise en oeuvre ne pourrait être effectuée que par un fabricant de capteurs de caméra. La reprise d'image aérienne selon l'invention permet de n'avoir qu'un seul réseau facilement réglable et amovible au cas où une compatibilité totale du matériel serait désirée (entre la prise de vue en relief et celle utilisée aujourd'hui).

Le dispositif de prise de vue selon l'invention permet d'une part de n'utiliser qu'un seul réseau 20 pour les trois couleurs, et d'autre part ce réseau est de grandes dimensions, ce qui permet à la fois de le fabriquer et de le positionner plus facilement avec la précision souhaitée. On évite ainsi les inconvénients à la fois de la figure 1 (réseau de faibles dimensions difficile à positionner dans le capteur, ce qui de toute façon n'évite pas les distorsions géométriques intrinsèques à cette géométrie), et de la figure 2 (grand nombre de réseaux lenticulaires dont l'alignement est pratiquement impossible à conserver en dehors de conditions expérimentales très strictes).

Selon un mode de réalisation préféré, le deuxième objectif $L_3$, $L_4$ de reprise d'image présente un diaphragme à iris. Un tel diaphragme est équivalent à un diaphragme en forme de fente horizontale dans le premier objectif $L_1$, $L_2$, mais il est plus facile de le positionner puisque le seul paramètre est son centrage. Le diaphragme à iris centré du second objectif est équivalent à un diaphragme en forme de fente horizontale dans le premier objectif. En effet, le réseau utilisé étant de type cylindrique vertical, les rayons lumineux émergeants de la première pupille ne sont pas perturbés dans le sens parallèle à l'axe des micro-lentilles, alors que dans le sens horizontal, ces rayons sont définitivement liés aux images de la pupille obtenue par chaque micro-lentille. Les images de la pupille ne peuvent pas être affectées par la diminution de la taille de la pupille du second objectif.

La discrétisation des capteurs 24, 25, 26 de la caméra permet de ne pas avoir à diviser la pupille en autant de sous-pupilles qui seraient en nombre égal au nombre de points de vue choisis. En effet, lors de la reprise d'image, l'image du réseau 20 est calée de telle sorte que chaque image de chaque lentille (ou micro-image de la pupille) se forme sur un nombre entier de points image (ou pixels) égal au nombre de points de vue. La discrétisation de la surface sensible des capteurs CCD induit par retour inverse des chemins lumineux une discrétisation de la première pupille du système. Le fait que les micro-images de la pupille N°1 qui se forment à l'endroit du réseau lenticulaire (et cela à la manière d'un continuum) se trouvent projetées sur une structure discrète du point de vue spatial, mais aussi énergétique, permet de diviser la pupille en autant de zones géographiques distinctes égales en nombre et en disposition relative aux pixels mis en correspondance exacte avec des lentilles du réseau. Dans l'exemple précité, chaque image de micro-lentille se forme horizontalement, sur quatre pixels, ce qui découpe la pupille principale en quatre zones égales séparées par des parties rendues aveugles parce qu'elles correspondent aux espaces inter-pixels des capteurs CCD. La structure horizontale de la surface sensible choisie détermine la structure résultante de la pupille utile à la prise de vue en relief et détermine par conséquent les moyens de traitement de l'image ainsi obtenue. Le fait d'utiliser quatre pixels par micro-lentille conduit à filmer quatre points de vue simultanément (un point de vue par sous-pupille). Le traitement électronique de l'image devient possible parce que le traitement est réalisé sur la plus petite entité de l'image composite obtenue : le pixel, d'où, une excellente séparation entre les points de vue. La permutation des pixels dans les colonnes délimitées par les bords des images des micro-lentilles correspond à la permutation de la position des sous-pupilles sus-décrites.

Une séparation stéréoscopique encore meilleure peut être obtenue en disposant la direction des lignes du capteur 22 parallèlement à l'axe des lentilles du réseau lenticulaire 20. En effet, la séparation entre les points image voisins appartenant à des lignes différentes est supérieure à celle entre des points image voisins appartenant à une même ligne. Ceci correspond à un positionnement à 90° par rapport aux conditions habituelles (balayage ligne vertical) mais ceci peut être, si on le souhaite, rétabli par un traitement électronique approprié.

Lorsque l'image issue de la caméra tri-CCD est traitée à la fréquence pixel ou à la fréquence ligne (selon le sens dans lequel on désire filmer une scène en trois dimensions) avec le mode appelé ("mode N images" colonnes ou lignes,) l'image est recomposée en temps réel de telle sorte que, sur le récepteur, il apparaît une image découpée en quatre parties verticales (cas de traitement au pas de quatre) qui contiennent chacune un point de vue. Le pixel N°1 reste à sa place, le N°2 devient le N°1 du second point de vue, le N°3 devient le N°1 du troisième point de vue et le N°4 devient le N°1 du quatrième point de vue. Le N°5 devient le pixel N°2 du premier point de vue et ainsi de suite modulo 4.

Ceci implique que lorsque l'on observe le point de vue N°1, on regarde en fait un pixel sur quatre de l'image initiale. Pour le point de vue N°1 les N° de pixels consécutifs de la première ligne correspondent aux N°1,5,9,13,17,21,25,29,33,37,41, etc... jusqu'à la fin de la ligne utile. Pour la seconde ligne on recommence à l'identique et ainsi de suite pour toute l'image. La largeur totale d'un point de vue est égale au quart d'écran, et le point de vue est représenté par une image plate, comprimée dans le sens horizontal de la scène filmée, c'est-à-dire une image plate de format anamorphosé pour chacun des quatre points de vue. Il a été montré ci-dessus le lien entre les pixels des capteurs CCD, les micro-lentilles situées au premier plan image et les sous-pupilles de l'objectif principal. Il apparaît que le point de vue ainsi reconstruit correspond exactement à l'une des quatre sous-pupilles (cas du réglage avec quatre pixels par micro-lentille).

Lorsque par le truchement d'un diaphragme positionné dans l'objectif principal, on coupe le chemin optique correspondant à l'une de ces sous-pupilles, le point de vue correspondant sur l'écran de visualisation disparaît. Si on observe le réseau lenticulaire du système de prise de vue, on peut constater que la lumière n'éclaire plus que les trois-quarts de chaque micro-lentille et si on pouvait observer directement le capteur CCD, on pourrait constater qu'un pixel sur quatre ne reçoit plus de lumière.

Ainsi, la moindre erreur de positionnement de la caméra par rapport au réseau entraîne des défauts parfaitement identifiables et reproductibles de la mise en correspondance du réseau avec les capteurs de la caméra. Ces erreurs de projection se traduisent par des défauts d'obscurcissement des points de vue dans le mode N images associé à un diaphragme partiel à l'endroit des sous-pupilles. Sans ce mode de traitement, il faudrait repérer les défauts d'obscurcissement d'un pixel sur quatre et être capable de repérer les parties d'écran où le pixel éteint n'appartient plus à la même série. Les défauts de réglage entraînent une projection du réseau non orthoscopique, les formes de moiré obtenues sont alors très changeantes, elles vont d'un moiré d'autant plus large que la fréquence lentille approche la fréquence pixel divisée par quatre (cas où seul le grandissement de la projection n'est pas parfait) à des formes de trapèze ou à des moirés courbes à fréquences progressives. Le mode N images permet de grossir le phénomène environ 200 fois, les défauts sont alors observables à l'échelle d'un quart d'écran et non plus de celle des pixels. La précision et la répétabilité des réglages deviennent accessibles sans les appareils de contrôle que l'on trouve dans les laboratoires d'optique. L'expérience aidant, il est aisé d'associer une correction de la position de la caméra dans l'espace avec des vis micrométriques aux défauts observés macroscopiquement par ce procédé avec chaque prise de vue afin d'obtenir une bonne distribution spatiale des points de vue à la visualisation ou/et à l'enregistrement ; les erreurs de cette nature ne sont plus réparables après.

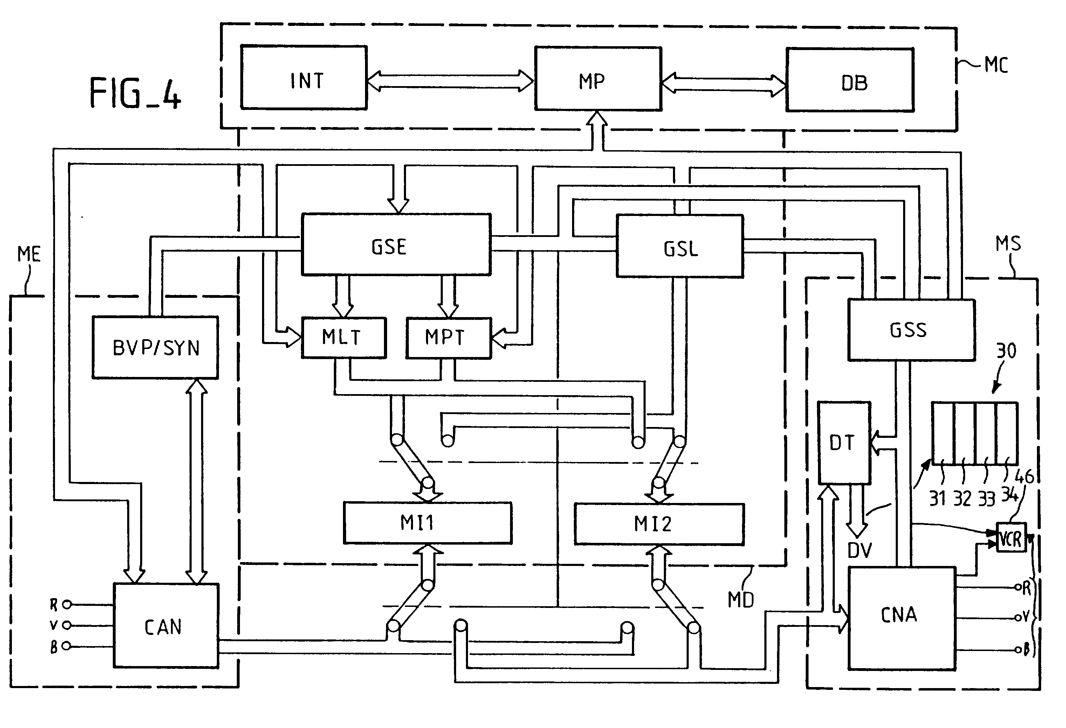

Selon la figure 4, un module de transcodage comporte un module d'entrée ME présentant un convertisseur analogique-numérique CAN et un circuit de boucle à verrouillage de phase et d'extraction de synchronisation BVP/SYN, un module de commande MC comportant un interface opérateur INT, un microprocesseur MP et une banque de données DB, un module numérique MD comprenant un circuit GSE de génération de signaux d'adresse d'écriture, un circuit GSL de génération de signaux d'adresse de lecture, une mémoire ligne de transcodage MLT, une mémoire pixel de transcodage MPT, une première mémoire d'image MI1, et une deuxième mémoire d'image MI2, ainsi qu'un module de sortie comprenant un circuit GSS de génération de signaux de synchronisation de sortie, un convertisseur numérique-analogique CNA et/ou un module DT de génération d'images numériques vidéo sur un bus de sortie DV. La sortie numérique du circuit DT ou les sorties analogiques du convertisseur CNA permettent l'obtention d'une image transcodée 30 comportant une pluralité (ici 4) d'images plates de format anamorphosé 31 à 34 disposées côte à côte. Chaque image plate contient la totalité des informations d'un seul point de vue stéréoscopique. Sa hauteur est celle d'une image normale, et sa largeur est égale au quart de la largeur d'une image normale.

Pour des images couleurs, les circuits de conversion CAN et CNA fonctionnent en mode trois fois 8 bits, c'est-à-dire avec une définition de 8 bits pour chacune des trois couleurs. Les mémoires lignes ou pixels de transcodage (MLT, MPT) permettant l'adressage en écriture et le générateur de signaux de lecture GSL et d'écriture GSE communiquent par des bus de 10 bits.

Le module numérique MD effectue tous les traitements nécessaires pour réaliser l'algorithme spécifique au mode choisi (N images anamorphosées, mode relief) en sortie entrelacée ou progressive.

A titre d'exemple, le circuit de conversion CAN peut être un convertisseur triple BT 253 (de la société BROOKTREE) , le circuit de conversion CNA, un convertisseur triple BT 473 de la même société. L'extracteur de synchronisation SYN peut être un circuit LM 1881 (National Semiconductors) qui travaille directement sur des signaux vidéo en extrayant la synchronisation composite. La boucle à verrouillage de phase BVP peut être un circuit 74HC4046 (MOTOROLA).

La génération des signaux d'adresse d'écriture GSE peut être intégrée dans un circuit logique programmable. Il en est de même pour la génération des signaux d'adresse en lecture dans le circuit GSL. Le microprocesseur MP est également programmable pour réaliser d'autres fonctions telles qu'arrêt sur image, ou arrêt sur image couleur par couleur.

Les mémoires d'images $MI_1$ et $MI_2$ constituent des plans images qui alternent lecture et écriture à la fin de chaque image en provenance de la caméra CCD. Chaque mémoire d'image $MI_1$, $MI_2$ peut accepter pour

chaque couleur, par exemple 1024 lignes de 1024 pixels, ce qui corresond, en tenant compte du nombre de couleurs, à 3 Mégaoctets pour chaque mémoire.

Dans ce cas, on utilise 20 bits d'adresse pour accéder à la totalité des pixels d'un plan.

Les générateurs d'adresse ou compteur en lecture comme en écriture, se décomposent de la sorte :

- les 10 bits de poids les plus faibles représentent la position d'un point image ou pixel dans la ligne,
- les 10 bits de poids les plus forts représentent la position de la ligne dans l'image (n° de ligne).

Ces compteurs fournissent une valeur linéaire, en partant de zéro et en s'incrémentant régulièrement jusqu'à la valeur maximale programmée correspondant au standard vidéo choisi.

Les traitements images réalisés dans le cadre de l'invention font tous appel à des permutations de pixels et/ou de lignes obéissant à un algorithme spécifique au mode choisi.

Etant donné que de tels algorithmes sont pratiquement impossibles à calculer en temps réel (inférieur à 70 ns), ces commutations ou permutations sont pré-calculées et sont intégrées dans la banque de données DB du module de commande MC. Cette banque de données DB permet de charger l'une ou l'autre des mémoires MLT et MPT qui sont disposées en tampon entre les mémoires d'images ($MI_1$, $MI_2$) et la sortie des générateurs d'adresse.

Ainsi, pour chaque adresse en provenance du compteur d'écriture, une nouvelle adresse est fournie permettant d'écrire le pixel ou la ligne venant de la caméra à n'importe quel endroit du plan image $MI_1$ ou $MI_2$. Ceci est réalisé en mettant en oeuvre une mémoire de transcodage MLT ou MPT.

Chaque bloc adresse dudit bit sortant des compteurs est lié à une mémoire de transcodage MLT ou MPT d'une profondeur de 1024 fois 10 bits. Les sorties de ces mémoires constituent une nouvelle adresse de 20 bits qui sont reliées directement aux mémoires $MI_1$ et $MI_2$ en écriture. La particularité de ces mémoires est d'être très rapide (temps de réponse inférieur à 20 nanosecondes).

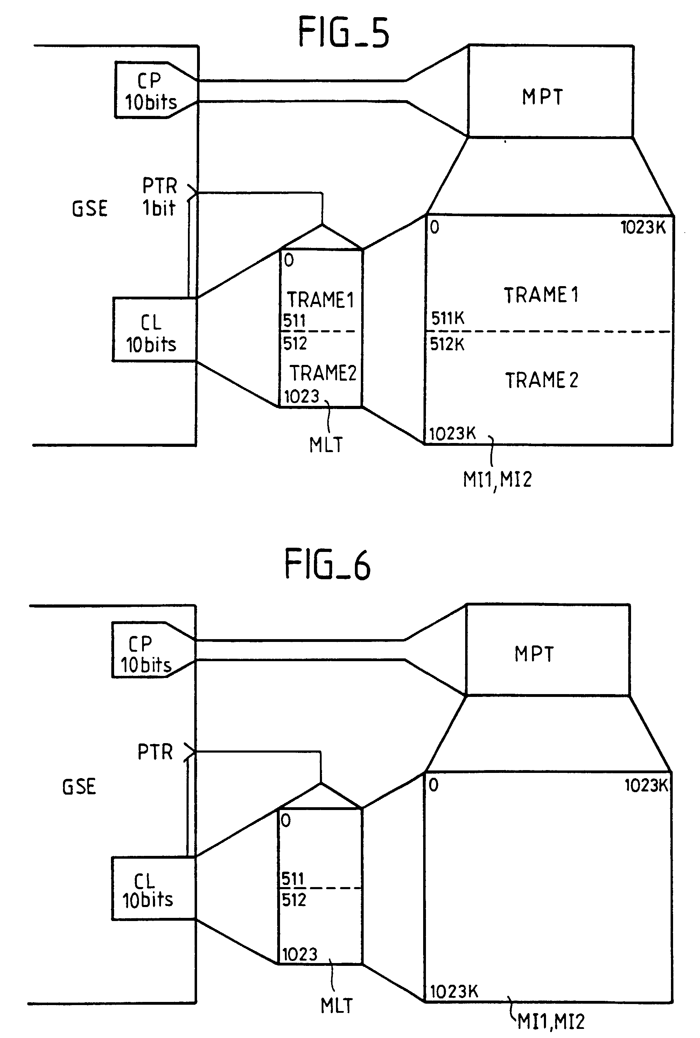

Les 10 bits de l'adresse pixel CP (voir figures 5 et 6) sont incrémentés par l'horloge de fréquence 14,1875 MHz du circuit de synchronisation et de verrouillage BVP/SYN. Cette fréquence est accordée à l'horloge interne de la caméra CCD.

Les 10 bits de l'adresse ligne CL sont incrémentés par la synchronisation de lignes issue du circuit BVP/SYN.

La mémoire de transcodage pixel MPT est toujours adressée avec un compteur de 10 bits et est donc vue comme un seul bloc de 0 à 1023 quel que soient les modes, en relief N images, sorties entrelacées ou progressives.

La mémoire de transcodage lignes MLT est scindée en deux parties, à savoir les adresses 0 à 511 pour la première trame incluant les lignes impaires de l'image en mode entrelacé provenant de la caméra CCD, et adresses de 512 à 1023 pour la deuxième trame incluant les lignes paires de l'image. L'adresse est obtenue par un compteur à 10 bits CL, dont le dixième bit est constitué par le signal PTR de parité de trame (voir figures 5 et 6).

Dans le cas d'une sortie en mode entrelacé (figure 5), les mémoires d'images $MI_1$ et $MI_2$ sont divisées, elles aussi, en deux blocs, l'algorithme de transcodage étant tel qu'il permette lors de la lecture de trouver, dans le premier bloc, les lignes impaires correspondant à la première trame, (trame 1 à afficher), et dans le deuxième bloc, les lignes paires correspondant à la deuxième trame, (trame 2 à afficher). L'organisation est dans ce cas la suivante. La première trame présente les adresses de 0 à 511 (Koctets et la deuxième trame, les adresses comprises entre 512 Koctets et 1023 Koctets (1 Koctet = 1024 octets)..

Pour tous les modes avec sorties progressives (50 images/s), (figure 6), les mémoires d'images $MI_1$ et $MI_2$ sont constituées comme un seul bloc, la lecture trouvant les lignes à afficher dans les premiers 576 Koctets du plan image.

Cette organisation présente l'avantage que, étant donné que la mémoire de transcodage est scindée en deux par le dixième bit ou bit de parité n'appartenant pas à un compteur, la séparation en deux de la mémoire image $MI_1$ ou $MI_2$ en sortie entrelacée est uniquement réalisée par le contenu des informations dans la mémoire de transcodage ligne MLT. Cette organisation permet de faciliter la programmation des algorithmes.

En outre, le transcodage est réalisé au moment de l'écriture pour des raisons de vitesse, étant donné que la lecture peut s'effectuer à une fréquence double en cas de sortie progressive. Cette architecture permet donc de tenir compte au mieux de tous les cas possibles.

On comprendra que, s'il n'est pas souhaité de réaliser une sortie en mode progressif, le transcodage peut être alors réalisé au cours de la lecture, ou bien encore pour partie, lors de l'écriture, et pour partie, lors de la lecture.

Le module d'entrée ME permet de numériser les niveaux de signaux analogiques représentatifs des couleurs de chaque point image ou pixel. La fréquence de numérisation est voisine de 14 MHz et la résolution pour chaque couleur est de 8 bits. Le convertisseur analogique-numérique CAN, programmé par le module de commande MC permet le réglage du gain et du niveau du noir pour chaque couleur, les circuits de verrouillage de niveaux ("clamp") pour chaque couleur sont incorporés, de manière connue, dans le convertisseur (on rappelera qu'on utilise pour cela les niveaux donnés au début de chaque ligne dans les émissions de télévision normalisées, par exemple SECAM, PAL ou NTSC).

L'extracteur de synchronisation SYN et la boucle à verrouillage de phase BVP peuvent être intégrés dans le même composant. On remarquera que ce composant peut être choisi parmi ceux présentant une gigue ("jitter") restant dans les limites très faibles (inférieure à 5 nanosecondes).

Cette qualité permet en effet d'obtenir un point image ou pixel ayant la même dimension en début et en fin de ligne.

En outre, la fréquence de la boucle verrouillée en phase BVP est choisie identique à celle de l'échantillonnage de la caméra. Ceci permet d'assurer qu'aucun pixel d'origine soit répété deux fois ou perdu. En effet, le repérage précis des points images ou pixels est très important dans le cas d'une image en relief, tout décalage pouvant entraîner une perte totale ou partielle de la perception du relief.

Pour permettre une réalisation simple, la fréquence de la boucle verrouillée en phase BVP est doublée de manière à permettre la multiplication par deux de la vitesse d'image en lecture pour tous les modes de fonctionnement avec sortie progressive. Une bascule de division par deux fournit ainsi une horloge pixel à l'écriture. Cette bascule est remise à zéro à chaque ligne pour éliminer un décalage d'un pixel à l'affichage que cela occasionnerait à chaque mise sous tension de l'appareil.

Le module de sortie MS permet de restituer sous forme analogique (convertisseur CNA) ou numérique (module DT et bus de sortie DV) l'image couleur qui a été traitée. La fréquence de restitution est celle de la fréquence de numérisation, soit le double de celle-ci, soit 30 MHz au maximum avec une résolution de 8 bits par couleur.

Le convertisseur numérique-analogique CNA intègre plusieurs fonctions, à savoir la fonction mélangeur de synchronisation, et le réglage des couleurs, ceci de manière connue en soi.

La logique GSS de génération des synchronisations de sortie est pratiquement transparente dans tous les modes de sortie entrelacées. En effet, les signaux de synchronisation d'origine venant de la boucle verrouillée en phase BVP sont aiguillés directement vers la sortie.

Dans les modes de sorties progressives, la logique recrée, à partir des synchronisations d'origine, les synchronisations synthétiques pour les téléviseurs et les moniteurs acceptant des vitesses de balayage (50 images/s ou bien 60 images/s) double de celles fournies par la caméra d'entrée. Le principal avantage d'un balayage à double vitesse est la suppression du scintillement de l'image ("flicker") observable parfois sur les standards actuels, ce phénomène étant accentué par le procédé de télévision en relief. Cette logique est intégrée dans des circuits logiques programmables.

Le module de commande MC permet de programmer le réglage des gains du niveau du noir des signaux d'entrée, de configurer les circuits logiques programmables du module numérique en fonction du mode choisi, de configurer le circuit logique programmable du synthétiseur de synchronisation GSS selon le mode choisi, de corriger les couleurs en sortie au moyen des tables intégrées au convertisseur numérique-analogique CNA, et de manière générale de réaliser des fonctions annexes par une interface INT.

La banque de données DB contient toutes les informations à recopier dans les mémoires de transcodage ligne MLT et pixel MPT pour les pas de 1 à 8 (c'est-à-dire pour des nombres de points de vue compris entre 1 et 8) et pour tous les modes qui seront décrits ultérieurement.

Elle contient également les données permettant de réinitialiser les circuits logiques programmables du synthétiseur de synchronisation GSS, de la génération des signaux en écriture GSE, du générateur de signaux en lecture GSL, en fonction des algorithmes et des modes de sortie choisis par l'opérateur.

L'interface opérateur INT comporte un écran de visualisation à cristaux liquides, et un clavier est relié au système par exemple par une liaison série synchrone de type "BUS I2C" de la Société PHILIPS.

Il est également possible de remplacer l'interface opérateur INT par un calculateur extérieur, ce qui permet éventuellement de charger dans les mémoires vives le transcodage des algorithmes non prévu au départ dans l'appareil.

Dans la suite de la description, chacun des modes sera analysé à partir de trois représentations graphiques, à savoir :

- une représentation de l'écran après traitement,
- un tableau démontrant l'action de la mémoire de transcodage,
- un synoptique des éléments matériels et des signaux mis en jeu.

Pour les tableaux représentant l'action de la mémoire de transcodage, MLT ou MPT, sont identifiés à partir du standard d'entrée (image stéréoscopique normale ou en mode dit N images, c'est-à-dire correspondant à une pluralité d'images plates de format anamorphosé disposées côte à côte) :

- mode de transcodage (relief ou mode N images par exemple pour sortie sur magnétoscope 46),
- le standard de sortie (mode entrelacé et/ou progressif).

On notera que le brevet US 5 099 320 de la demanderesse délivré le 24.03.92 décrit le moyen d'obtenir une image en mode relief à partir de lentilles cylindriques qui fournissent une image en relief inversé. Ce brevet décrit en particulier les permutations d'adresses permettant d'obtenir une image en relief véritable.

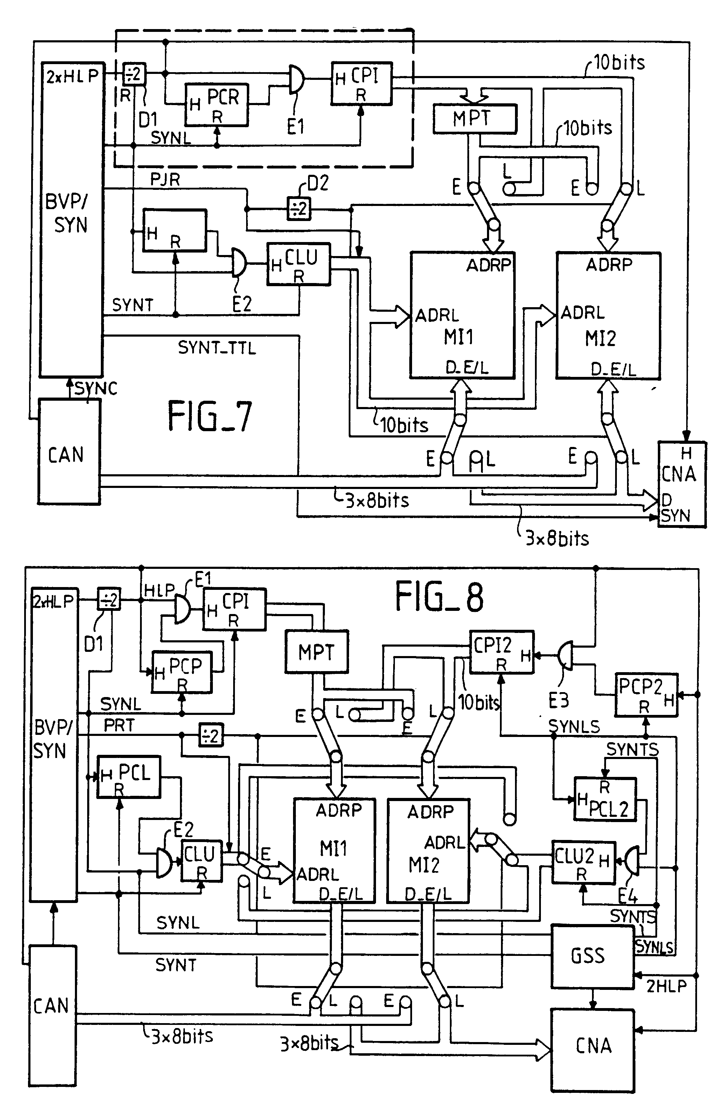

La figure 7 représente un module de transcodage correspondant à la figure 4, mais dans lequel seuls les éléments nécessaires à un transcodage entre une image d'entrée en 25 images/s entrelacées et une image de sortie en 25 images/s entrelacées et un traitement en "mode pixel" est réalisé. On définit le mode pixel comme un mode présentant un balayage ligne horizontal, et dans lequel le traitement de l'information en relief est obtenu par permutation des pixels d'une ligne sans permutation des lignes entre elles.

Ainsi qu'il est décrit ci-dessus, le circuit BVP/SYN reçoit de manière connue, du convertisseur analogique-numérique CAN, un signal de synchronisation composite SYNC petit niveau et restitue en sortie, d'une part, un signal de synchronisation de ligne SYNL, un signal de parité de trame PTR et un signal d'horloge pixel à la fréquence double de la fréquence correspondant à 25 images/s, ce signal ayant sa fréquence divisée par deux par le diviseur de fréquence $D_1$ remis à zéro au début de chaque ligne par le signal SYNL. Le signal d'horloge pixel HLP fourni en sortie du diviseur par deux $D_1$ attaque d'une part le signal d'horloge du convertisseur numérique-analogique CAN, et d'autre part, l'entrée de cadencement H (comptage) d'un précompteur de pixels PCP remis à zéro au début de chaque ligne par le signal SYNL, et enfin, une entrée d'une porte ET $E_1$ dont l'autre entrée reçoit la sortie du précompteur de pixels PCP, la sortie de la porte ET attaquant l'entrée de comptage H d'un compteur de pixels utiles CPI qui est également remis à zéro au début de chaque ligne par le signal SYNL.

Le signal de parité de trame PTR est divisé par deux par un diviseur $D_2$ de manière à commuter à chaque image l'opération d'enregistrement et lecture entre les mémoires d'image $MI_1$ et $MI_2$. En d'autres termes, les images fournies par la caméra sont enregistrées, l'une dans la mémoire $MI_1$, la suivante dans la mémoire $MI_2$, la suivante de nouveau dans la mémoire $MI_1$, et ainsi de suite. Ceci permet d'assurer une facilité de lecture puisque la mémoire $MI_1$ est lue pendant le temps où la mémoire $MI_2$ est en écriture et réciproquement.

Le signal de parité de trame est également fourni au bus de commande 10 bits des adresses des plans d'images mémoires d'images $MI_1$ et $MI_2$ de manière à identifier le secteur de ces mémoires correspondant à l'une ou l'autre des trames d'une image.

En ce qui concerne le comptage des lignes, le signal de synchronisation SYNL est fourni à un précompteur lignes PCL remis à zéro par un signal de synchronisation de trame SYNT fourni par le circuit de synchronisation SYN intégré avec la boucle à verrouillage de phase BVP. Le signal SYNL ainsi que le signal de sortie du précompteur ligne sont introduits aux entrées d'une porte ET $E_2$ dont la sortie attaque l'entrée de comptage H d'un compteur de ligne utile CLU qui est remis à zéro par le signal de synchronisation de trame SYNT. La sortie du compteur de ligne utile CLU permet d'adresser les mémoires d'images $MI_1$ et $MI_2$ à partir d'un bus d'adresse à 10 bits. L'écriture et la lecture des données de mémoires d'images $MI_1$, $MI_2$ sont réalisées à partir d'un bus trois fois 8 bits, en écriture à partir du circuit du convertisseur analogique numérique CAN et en lecture, vers les entrées de données D du convertisseur numérique-analogique CNA lequel reçoit également un signal synchro-composite SYNC-TTL fourni par le circuit BVP/SYN.

Dans la configuration de la figure 7, l'adresse de ligne ADRL est fournie directement de manière classique aux mémoires d'images $MI_1$ et $MI_2$, alors que les adresses pixels ADRP sont fournies en tenant compte du tableau de correspondance qui est mémorisé dans la mémoire pixel de transcodage MPT.

On notera que dans tous les cas d'un traitement selon les pixels et à 25 images/seconde, la taille de mémoire peut être très réduite car le traitement peut s'effectuer ligne par ligne au lieu d'image par image (ou trame par trame).

La figure 8 représente un module de transcodage dans lequel l'entrée est à 25 images/seconde entrelacées, et la sortie, en 50 images/seconde progressives avec un traitement selon les pixels. En ce qui concerne les opérations d'écriture, l'organisation d'architecture est la même que la figure 7 (circuits D1, PCP, CPI, MPT, PCL, CLU, D2, EI et E2). La différence d'architecture concerne la lecture en raison de la nécessité de générer des synchronisations synthétiques à 50 images/s (ou 60 images/s en standard NTSC).

Pour synthétiser ces signaux de synchronisation, le module de transcodage présente un deuxième compteur de pixels utiles CPI2 dont l'entrée de comptage H est connectée à la sortie d'une porte ET E3 dont une entrée reçoit le signal 2 x HLP fourni par le circuit de synchronisation SYN et dont l'autre entrée est connectée à la sortie d'un deuxième précompteur de pixels PCP2 dont l'entrée de comptage H reçoit le signal 2 x HLP. Un générateur de synchronisation synthétique GSS reçoit, du circuit BVP/SYN, à la fois des signaux de synchronisation de trame SYNT et des signaux de synchronisation de ligne SYNL ainsi que le signal 2HLP. Le circuit GSS peut être par exemple, le circuit intégré LM 1882 (National Semiconductors). Il génère en sortie, à partir de ces signaux un signal de synchronisation de trame synthétique SYNTS et un signal de synchronisation de ligne SYNLS correspondant à une image vidéo en mode 50 images progressives dans l'exemple envisagé. Les circuits CPI2 et PCP2 sont remis à zéro au début de chaque ligne par le signal SYNLS. Le signal SYNLS attaque l'entrée de comptage H d'un précompteur de lignes PCL2 qui est remis à zéro par le signal SYNTS. La sortie du précompteur de lignes PCL2 attaque une porte ET E4 dont l'autre entrée reçoit le signal synthétique de synchronisation lignes SYNLS. La sortie de la porte ET E4 attaque l'entrée de comptage H d'un circuit de comptage de lignes utiles CLU2 remis à zéro par le signal SYNTS. Le circuit CLU2 fournit des adresses de lignes pour la lecture alternativement, des mémoires $MI_1$ et $MI_2$. Le séquencement de l'horloge est le suivant : une première image en mode 25 images entrelacées est enregistrée sur la mémoire $MI_1$, l'image

suivante est enregistrée sur la mémoire $MI_2$. Pendant l'écriture dans la mémoire $MI_2$, la mémoire $MI_1$ est lue deux fois de suite de manière à produire deux images à une cadence double, chacune de ces images étant en mode progressif, par lecture de la première ligne de la première trame, puis de la première ligne de la deuxième trame, puis de la deuxième ligne de la première trame, puis de la deuxième ligne de la deuxième trame, et ainsi de suite.

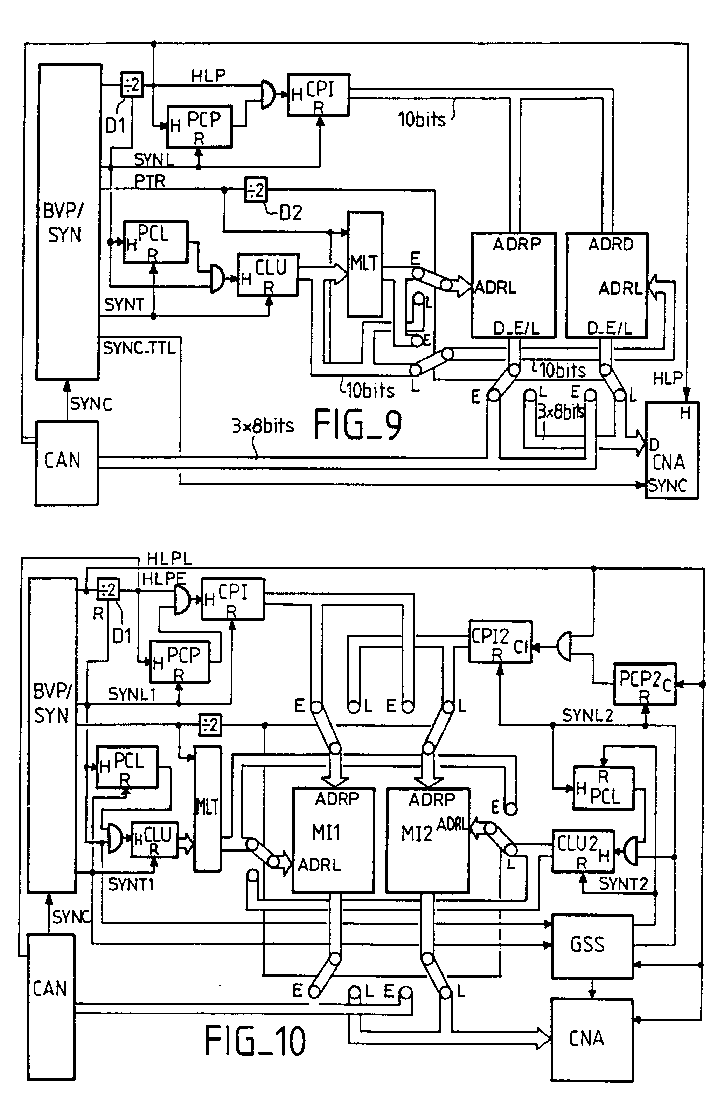

La figure 9 correspond à un module de transcodage avec une entrée à 25 images entrelacées et une sortie en 25 images entrelacées, avec traitement selon les lignes, c'est-à-dire que le balayage des lignes de l'image est vertical. Ce module est semblable à celui de la figure 7 à ceci près que la mémoire de transcodage pixel MPT est remplacée par une mémoire de transcodage ligne MLT alimentée par un bus à 10 bits à partir du compteur de lignes utile CLU ainsi que par le signal de parité trame PTR.

La figure 10 concerne le cas d'une entrée en 25 images entrelacées et une sortie en 25 images progressives avec un traitement selon les lignes, et elle diffère de la figure 8 de la même manière que la figure 9 diffère de la figure 7.

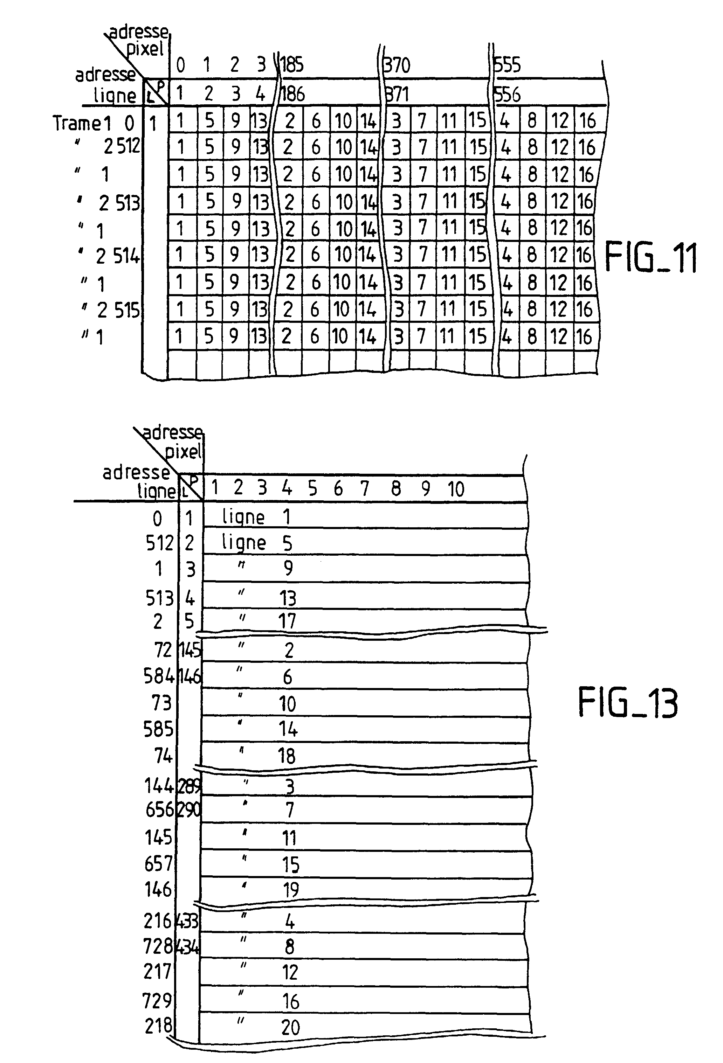

La figure 11 illustre un tableau d'interversion des pixels en mode N images, par exemple quatre images plates anamorphosées 31 à 34, à partir d'une image tramée dont les adresses lignes sont successivement 0, 1, 2, 3, 4 jusqu'à 511 pour la première trame, et 512, 513, 514, etc jusqu'à 1023 pour la deuxième trame (1024 lignes en tout).

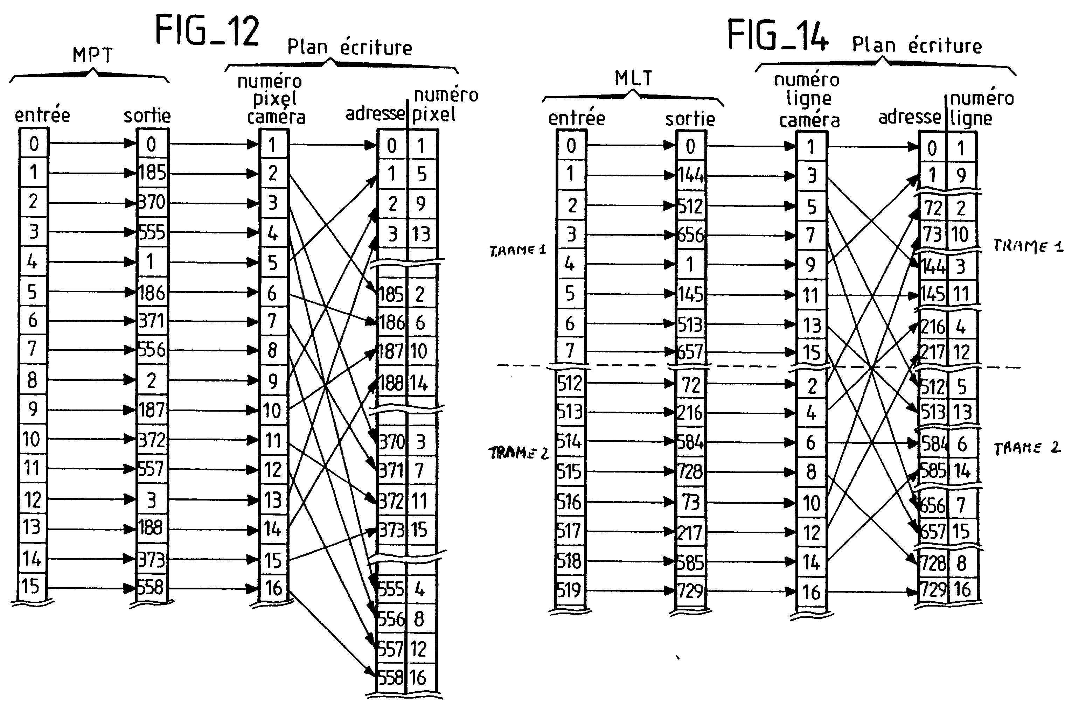

L'adresse ligne 0 correspond à la ligne 1 de la première trame, l'adresse 512 à la première ligne de la deuxième trame qui est la deuxième ligne de l'image et ainsi de suite. Pour le mode "N images", avec un pas de 4, la première image plate de format anamorphosé retient les pixels de rang 1, 5, 9, 13 de chaque ligne, une ligne de l'image plate de format anamorphose comportant 185 pixels. La deuxième image plate comporte les pixels de rangs 2, 6, 10, 14, et ainsi de suite, le pixel de rang 2 de chaque ligne d'origine venant après transcodage sur la 186ème colonne de l'image soit à l'adresse pixel 185. Il en va de même pour les troisième et quatrième images plates de format anamorphosé avec respectivement les pixels 3, 7, 11, 15, etc et 4, 8, 12, 16 etc à partir des adresses pixels 370 et 555 respectivement (371ème et 556ème colonnes). Le tableau mémorisé dans la mémoire pixel de transcodage MPT correspondant à cette conversion est représenté à la partie gauche de la figure 12 selon lequel le premier pixel d'une ligne est envoyé en sortie à l'adresse pixel 0, le pixel suivant d'adresse 1 est envoyé à l'adresse pixel 185 et ainsi de suite. La partie de droite représente l'action de permutation obtenue par la mémoire MPT au niveau de l'écriture des mémoires $MI_1$ et $MI_2$. Le premier pixel de la caméra est envoyé à l'adresse 0, le cinquième pixel à l'adresse 1, le neuvième pixel à l'adresse 2, le treizième à l'adresse 3, le deuxième à l'adresse 185, le sixième à l'adresse 186 et ainsi de suite, d'où restitution en mode N images, dans lequel la totalité des informations de l'image autostéréoscopique sont conservées et comportant quatre images plates de format anamorphose, sans perte d'information.

Le schéma de la figure 12 permet, lors de la lecture, soit un mode entrelacé soit un mode progressif ainsi qu'il a été décrit ci-dessus. En effet, le passage d'un mode entrelacé en mode progressif met en oeuvre seulement un adressage particulier des lignes en lecture, sans influence donc sur la permutation des pixels qui est la même pour toutes les lignes.

La figure 13 représente la mise en oeuvre d'un mode N images avec un pas de 4 avec permutation des lignes, c'est-à-dire pour une image à balayage vertical des lignes. La première ligne correspondant à l'adresse ligne 0 reste inchangée. La deuxième ligne de l'image plate de format anamorphosé doit être la ligne 5 de l'image tramée d'origine, la troisième ligne doit être la ligne 9, et ainsi de suite. La deuxième image plate est composée des lignes 2, 6, 10, 14, etc, de l'image tramée d'origine. La troisième image est composée des lignes 3, 7, 11, 15, 19, etc, de l'image tramée d'origine et la quatrième image plate de format anamorphosé, des lignes 4, 8, 12, 16, 20, etc de l'image tramée d'origine. Chaque image plate comporte 144 lignes verticales, soit un nombre total de lignes égal à 576 dans l'exemple précité.

La mémoire ligne de transcodage MLT représentée à la partie gauche de la figure 14 en correspondance avec le tableau de la figure 13 (mais avec un pas de N = 8). On rappellera l'organisation de la mémoire d'image $MI_1$ ou $MI_2$ mentionnée aux figures 5 et 6. La première ligne d'adresse 0 de la première trame devient en sortie la première ligne d'adresse 0, la deuxième ligne d'adresse 1 de la première trame devient en sortie la 145ème ligne d'adresse 144, et ainsi de suite. Pour la deuxième trame, la première ligne d'adresse 512 devient, en sortie, la ligne d'adresse 72. En effet, étant donné que l'image comporte 576 lignes dans l'exemple envisagé, chaque image plate a une largeur de 72 lignes. De plus, le tableau de conversion tient compte de ce que la sortie de l'image est prévue en mode entrelacé. La partie droite de la figure 14 montre de manière analogue à la figure 12, le résultat de la permutation d'adresses effectuée au moment de l'écriture dans les mémoires $MI_1$ et $MI_2$, la première image plate étant composée des lignes 1, 9, 17, 25 etc, et ainsi de suite.

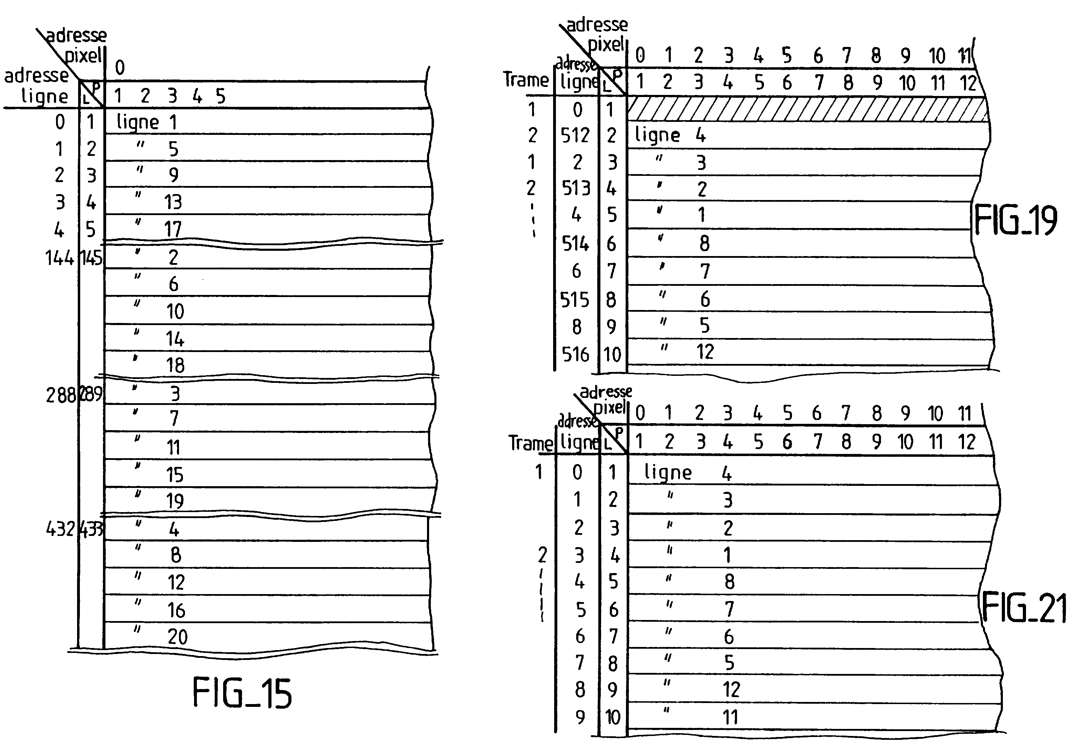

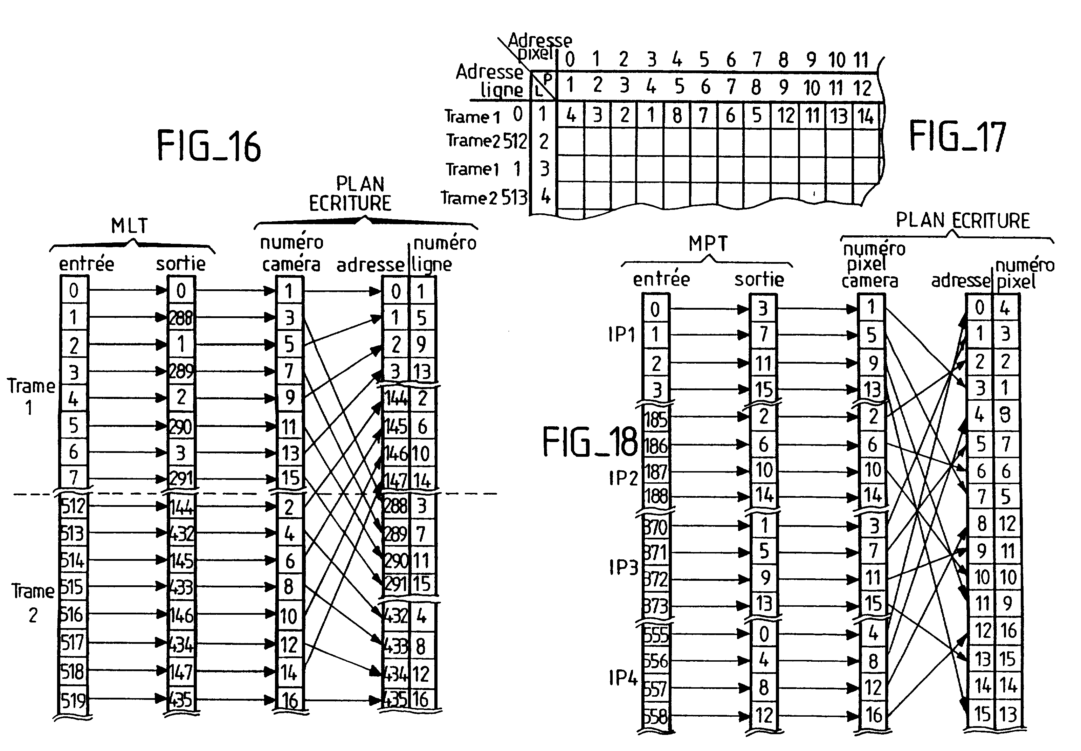

La figure 15 correspond au cas de la figure 13 mais pour une sortie en mode progressif, la correspondance résultant dans la mémoire ligne de transcodage MLT et dans le plan d'écriture étant montrés à la figure 16. Pour N = 4, chaque image plate a une largeur de 144 lignes. La première ligne de la première trame garde son adresse (= 0). La première ligne de la deuxième trame, qui est la deuxième ligne de l'image d'origine, est positionnée à l'adresse 144, et ainsi de suite.

Une caméra CCD enregistre une image complète en deux temps (trame 1, puis trame 2). Entre les deux trames, la scène en mouvement s'est déplacée. Lors de la lecture, il faut respecter l'âge des trames, sinon il en résulte en effet avant/arrière d'autant plus prononcé que le mouvement de la scène est ample et rapide. En affichant l'image en une seule fois (mode progressif), le décalage temporel des trames se traduit seulement par un léger flou).

Les figures suivantes vont montrer comment on peut passer d'une image transcodée en mode N images anamorphosées à une sortie en mode relief en tenant compte du fait que l'image d'origine était en relief inversé.

Pour une image à balayage horizontal, c'est-à-dire en "mode pixel", la conversion est représentée à la figure 17 dans laquelle les quatre premiers pixels d'une ligne 1, 2, 3, 4 sont inversés. Le premier des pixels étant le pixel n°4, le deuxième le n°3, le troisième le n°2, et le quatrième le pixel n°1, et ainsi de suite. On remarquera que cette inversion a déjà été décrite en tant que telle dans le brevet des Etats-Unis US-5 099 320 précité. La figure 18 représente un tableau de conversion dans la mémoire pixel de transcodage MPT pour une entrée en mode N images (cf. figure 12) et une sortie en mode relief véritable, que l'image soit en mode entrelacé ou en mode progressif. La partie droite de la figure présente le résultat du transcodage réalisé en écriture dans les mémoires $MI_1$ et $MI_2$. Le premier pixel de l'image relief est constitué pour le premier pixel de l'image plate IP4. Son adresse (555) devient (0). Les deuxième, troisième et quatrième pixels de l'image relief sont constitués respectivement, par le premier pixel de l'image plate IP3 (adresse 370), IP2 (adresse 185) et IP1 (adresse 0), et ainsi de suite.

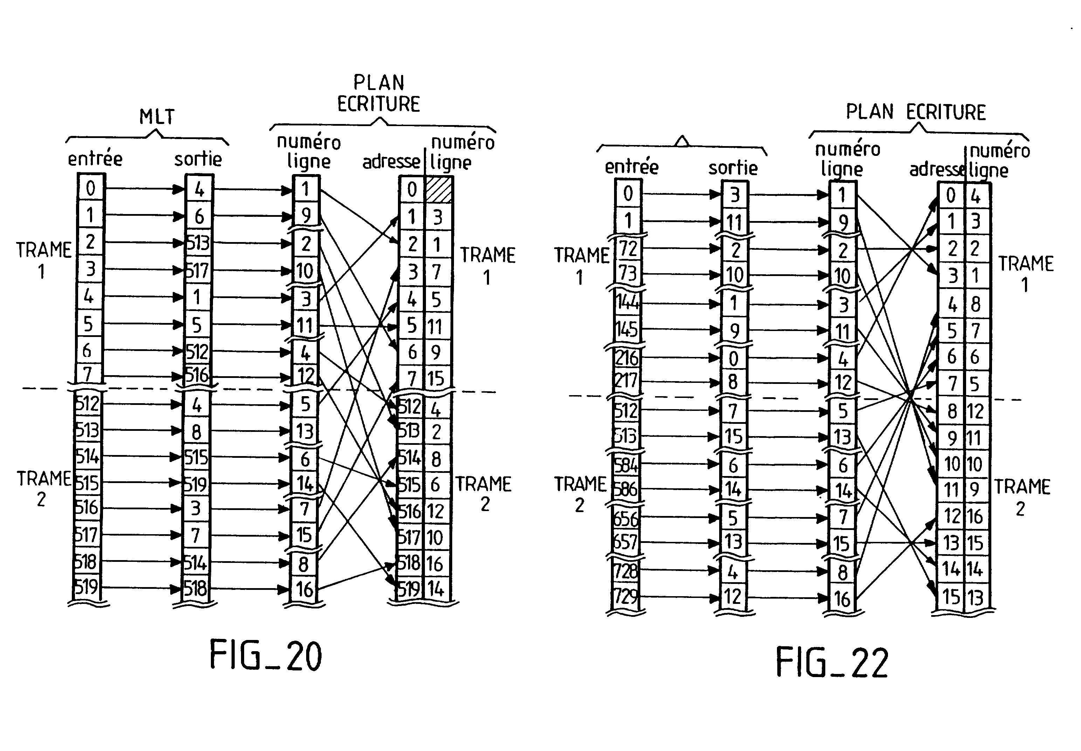

La figure 19 représente le cas d'une entrée en mode N images selon les lignes avec une sortie entrelacée en mode relief avec un pas de N = 4. La figure 20 représente le tableau de la mémoire ligne de transcodage MLT et la conséquence qui résulte de sa mise en oeuvre en écriture.

La figure 21 correspond au cas de la figure 20 mais avec une sortie d'image en mode progressif, conformément au tableau de la figure 22.

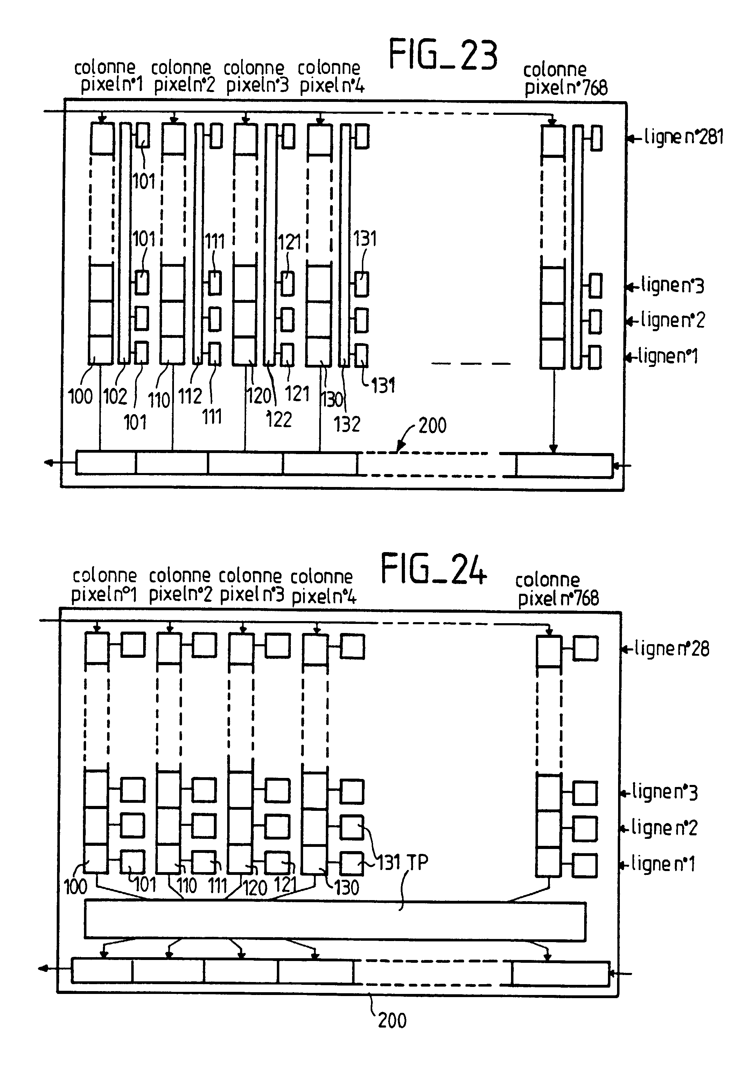

L'invention peut être mise en oeuvre autrement qu'en transcodant l'image à partir d'une conversion en numérique. En particulier, le transcodage peut être réalisé directement au niveau du capteur à couplage de charge CCD. La figure 23 représente un transcodage pouvant être réalisé suivant le mode ligne par interposition de matrices de transcodages identiques 102, 112, 122, 132, etc, matrices câblées qui sont interposées entre les éléments photosensibles disposés en colonnes 101, 111, 121, 131, etc et les registres à décalage de colonnes de pixels respectivement, 100, 110, 120, 130, etc. L'image transcodée est récupérée par le registre à décalage de sortie 200.

A la figure 24, les sorties des registres à décalage 100, 110, 120, 130, etc sont introduites dans une matrice de transposition pixel TP réalisant par interconnexion le bon aiguillage des pixels par le registre de sortie 200 selon le mode de transcodage désiré.

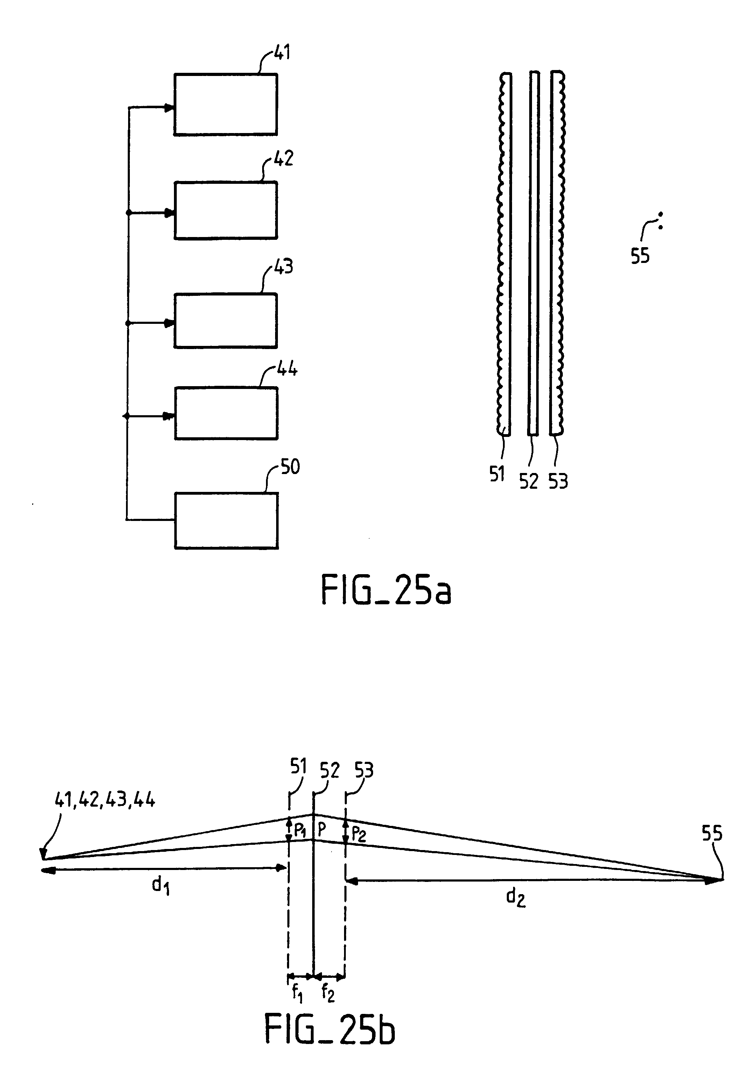

La figure 25a représente un dispositif de projection (ou de rétroprojection) présentant quatre projecteurs 41, 42, 43, 44 alimentés par un système électronique 50 et dont chacun envoie sur un dispositif de visualisation, une image plate, les différentes images plates étant superposées. On comprendra qu'au sens de la présente demande, le terme projecteur est à prendre dans son sens générique et qu'en particulier il inclut les rétroprojecteurs, c'est-à-dire les projecteurs équipés d'un ou plusieurs miroirs de renvoi.

L'exemple de réalisation de la figure 25a met en oeuvre quatre projecteurs vidéo à cristaux liquides 41, 44 de type SHARP XV100 dont chacun est doté d'une résolution de 280 lignes et 370 points/ligne en vraies couleurs rouge, vert, bleu superposées. Les points images ou pixels sont de forme carrée.

Les images sont projetées sur un écran dépoli 52 à travers un premier réseau optique 51 de type lenticulaire cylindrique vertical ou de type barrière de parallaxe. En aval du dépoli 52, est disposé un second réseau optique de type lenticulaire cylindrique vertical. L'image est observée par les yeux d'un observateur 55. Une description de barrières de parallaxe peut être trouvée en particulier dans l'article de Ian Sexton intitulé "Parallax barrier display systems" publié dans le compte rendu du colloque sur la télévision stéréoscopique du 15.10.92 sous la référence 99/2173 par Institution of Electrical Engineers - Londres 1992.

Pour obtenir une visualisation stéréoscopique de quatre points de vue, chaque projecteur 41, 44, envoie une image plate, quatre images plates étant superposées sur l'écran dépoli de manière connue en soi. Ainsi qu'on le verra par la suite, selon un mode de réalisation avantageux, on peut utiliser, dans ce mode de projection, les images plates de format anamorphosé transcodées ainsi que décrit précédemment, et éventuellement enregistrées sur un support. Dans ce cas, le système de prise de vue est utilisé de préférence dans la version en "mode pixel". Les projecteurs mettant en oeuvre des écrans à cristaux liquides qui présentent une rémanence meilleure que celle des écrans cathodiques, il n'est pas nécessaire de fonctionner en 50 Hz progressif. En d'autres termes, chaque quart d'image contient les mêmes pixels que dans le mode N images pixels, mais la restitution sur l'écran est différente, chaque quart d'image étant désanamorphosé et occupant la totalité de l'écran avec superposition des différentes images. La stéréoscopie est reconstituée grâce à l'effet directif obtenu par le réseau 53.

Le nombre maximal de pixels disponibles dans une ligne est de 740 dans l'application donnée à titre d'exemple, soit un maximum de 185 pixels par source. Le rétroprojecteur SHARP XV100 possède une définition d'environ 380 pixels/1, c'est-à-dire deux fois plus faible qu'un téléviseur, mais deux fois plus importante que les informations disponibles à chaque source.

Chaque projecteur SHARP XV100 comporte une source de lumière blanche, trois panneaux à cristaux liquides, des miroirs de renvoi avec des revêtements filtrant les rayonnements rouge, bleu ou vert selon les panneaux, et une optique unique de focale 90 mm.

Les quatre images sont superposées sur le plan de projection grâce au décentrement des optiques, les plans des panneaux restant parallèles aux plans images, et les bords de chaque image étant exactement superposés et rectangulaires.

Comme montré à la figure 25a, à quelques millimètres du plan image (dépoli 52), les quatre images élémentaires sont découpées en tranches par le réseau optique 51 de telle sorte que pour chacun des quatre points de vue se forment de petites lignes verticales imbriquées en nombre égal au nombre de micro-lentilles du réseau utilisé sans qu'il y ait superposition des informations lumineuses ou absence de celles-ci sur le dépoli fin utilisé comme plan image.

Selon l'invention, le pas du réseau 51 est choisi tel qu'il n'y ait pas de moiré avec la plus petite structure périodique de l'image affichée, à savoir que le pas du réseau est inférieur à la moitié d'un pixel. A titre d'exemple, pour une image de 0,9 m de large, le réseau 51 présente un pas d'environ 0,8 mm soit des lignes élémentaires de 0,2 mm par point de vue (modulo 0,8 mm) dans le cas d'une image à quatre points de vue.

Pour les projecteurs 41 à 44 disposés (voir fig. 25b) à une distance $d_1$ du réseau 51 de pas $P_1$ et de distance focale $f_1$, et un spectateur placé à une distance $d_2$ du réseau 53 de pas $P_2$ et de distance focale $f_2$, la condition d'obtention d'une teinte plate est :

$$P_1/P_2 = d_1/d_2 \frac{(f_2 + d_2)}{(f_1 + d_1)}$$

A l'observation de l'image résultante sur l'écran dépoli 52, il est possible de constater que toute la surface de l'écran est éclairée et que tous les 0,2 mm on change de point de vue. Il faut parcourir horizontalement une distance égale à la largeur totale de l'image divisée par le nombre de pixels de chaque point de vue pour que l'information de chaque point de vue soit modifiée. Il en résulte que la plus haute fréquence de cette image est liée au pas du réseau 51, qu'elle est significativement plus élevée que la fréquence pixel initiale. De la sorte, on évite les phénomènes de moiré sans dégrader la définition de l'image.

Le deuxième réseau optique lenticulaire 53 disposé entre le spectateur 55 et le dépoli 52, est choisi de manière à permettre l'observation binoculaire de cette image multiplexée, le pas et la focale du réseau 53 étant choisis de telle sorte que, à la distance d'observation choisie, le spectateur ne perçoit, pour chaque oeil, qu'un seul point de vue (teinte plate) et que ses deux yeux voient deux points de vue complémentaires (couple stéréoscopique). La teinte plate obtenue par ce système dépend du rapport entre la distance des projecteurs 41, 44 avec le premier réseau 51 qui sert à découper l'image et du choix du pas et de la focale de ce réseau, et de la distance entre le spectateur 55 et le réseau d'observation 53 ainsi que du choix du pas et de la focale de ce réseau. Un réglage peut être obtenu par superposition de lignes lumineuses provenant d'un des projecteurs avec celles venant d'une lampe simulant un des yeux de l'observateur pour le point de vue considéré.

Le pas des réseaux lenticulaires peut être choisi aussi petit que le permet le grain du dépoli. En effet, si le pas des réseaux est trop petit, le grain du dépoli induit une perte de définition.

<u>Exemple</u>

Les projecteurs 41, 44 sont distants entre eux de 100 mm et sont placés à une distance (ou chemin optique) égale à 1600 mm, du dépoli 52. Dans le cas de projecteurs dont la largeur de boîtier est supérieure à 100 nm, on dispose deux projecteurs horizontaux intercalés avec deux projecteurs disposés verticalement et dont chacun est muni d'un miroir de renvoi. Le premier réseau est du type à barrière de parallaxe au pas de 0,803 mm de distance focale 3,245 mm, le dépoli 52 étant placé au foyer du réseau de parallaxe. Le second réseau est un réseau optique cylindrique vertical de pas 0,8 mm (soit légèrement inférieur au pas du premier réseau) et de focale 17,56 mm ce qui permet d'obtenir une teinte plate pour un observateur placé à 3000 mm. Un observateur, dont les yeux sont distants l'un de l'autre d'un écart interpupillaire de 65 mm, verra les points de vue 1 et 3 ou 2 et 4 et chaque oeil verra une image d'un seul point de vue sans moiré.

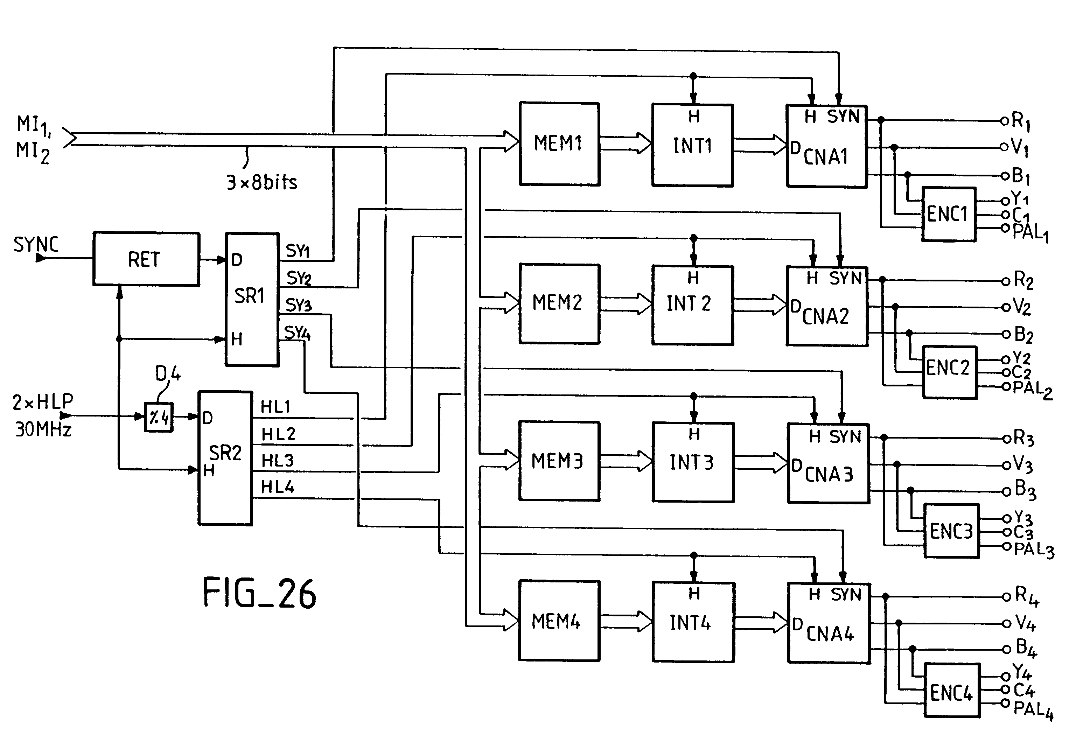

La figure 26 représente un module de sortie pour alimenter les projecteurs 41 à 44. Il comporte un circuit RET compensateur de retard d'interpolation dont la sortie alimente un premier registre à décalage SR1. Ce circuit RET est alimenté par la synchronisation composite d'origine SYNC ainsi que par l'horloge pixel 2 x HLP à cadence double (30 MHz). Le signal d'horloge pixel 2 x HLP à cadence double alimente l'entrée de données d'un registre à décalage SR2 à travers un diviseur par quatre D4 et l'entrée de cadencement des registres à décalage SR1 et SR2. Le registre à décalage SR1 produit des synchronisations décalées SY1, SY2, SY3, SY4 qui attaquent les entrées de synchronisation des convertisseurs numériques analogiques CAN1, CAN2, CAN3, CAN4 correspondant à chacun des projecteurs 41 à 44. Le registre à décalage SR2 fournit à ses sorties des signaux d'horloge ligne HL1, HL2, HL3 et HL4 qui sont introduits aux entrées d'horloge H des convertisseurs CAN1, CAN2, CAN3 et CAN4 ainsi qu'aux entrées d'horloge H des interpolateurs INT1, INT2, INT3 et INT4. Des mémoires MEM1, MEM2, MEM3, MEM4 permettant des corrections d'amplitude sont disposées en tampon entre les sorties des mémoires MI$_1$ et MI$_2$ des modules de transcodage précités et les entrées de données des circuits d'interpolation respectifs INT1, INT2, INT3 et INT4. Les convertisseurs CAN1, CAN2, CAN3 et CAN4 produisent des signaux de couleurs rouge, vert, bleu, R1, V1, B1, R2,V2,B2, R3,V3,B3, et R4,V4,B4 lesquels sont susceptibles d'alimenter les projecteurs 41 à 44 à travers des encodeurs vidéo dans la norme PAL, ou bien S-VHS, ces encodeurs étant désignés par ENC1, ENC2, ENC3 et ENC4.

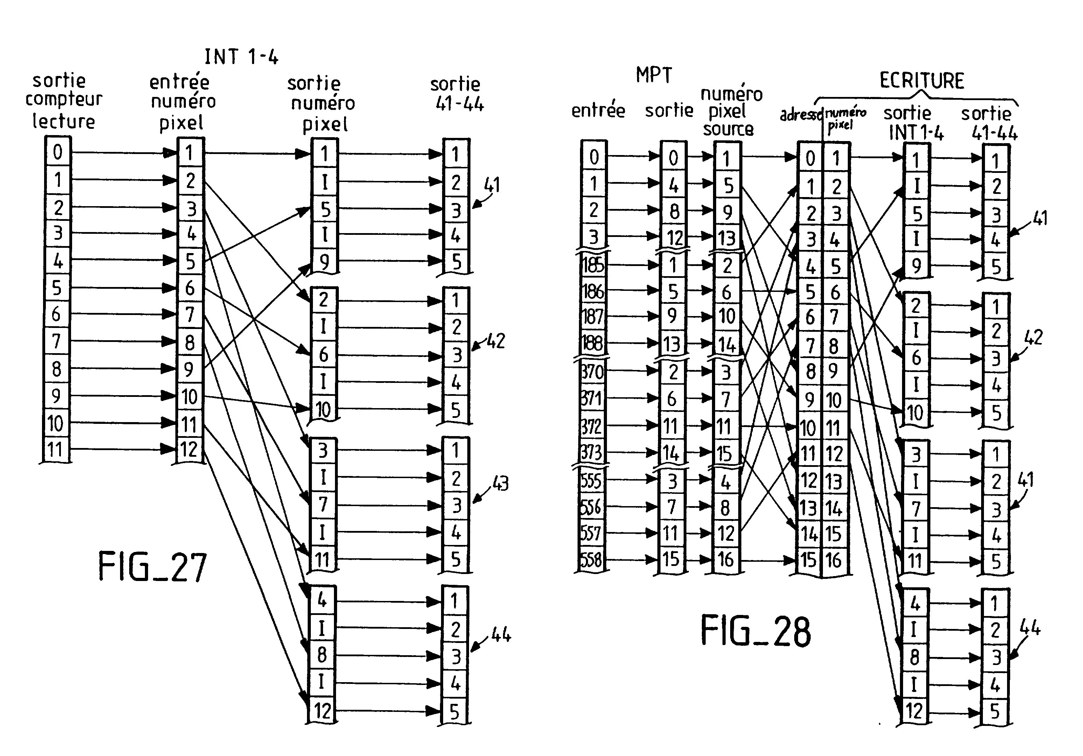

La figure 27 représente une opération de transcodage permettant de passer d'une image relief à pas de 4 à un ensemble d'images plates non anamorphosées destinées à être introduites dans chacun des projecteurs 41 à 44. Le projecteur 41 reçoit ainsi les pixels 1, 5, 9, etc..., le projecteur 42 les pixels 2, 6, 10, etc..., le projecteur 43 les pixels 3, 7, 11, etc.., et le projecteur 44 les pixels 4, 8, 12 et ainsi de suite. Entre chacun des pixels, 1, 5, 9, sont interpolés des pixels intermédiaires représentés par la lettre I et il en va de même pour chacun des projecteurs 41 et 44.

La figure 28 représente une opération de transcodage à partir de N images de format anamorphosé, ce transcodage sur les pixels (mémoire de transcodage pixel MPT) permettant de désanamorphoser et d'interpoler ces images pour fournir les pixels dans le bon ordre aux projecteurs 41 à 44.

L'invention ne se limite pas aux modes de réalisation décrits et représentés. On notera en particulier que le réseau lenticulaire 20 n'agit que dans une direction (horizontale). Un objet linéaire d'axe horizontal placé à l'infini donne une image réelle dans le plan focal P du réseau 20 situé en aval de celui-ci (dans le sens de propagation des rayons lumineux). Un objet linéaire d'axe vertical placé à l'infini donne une image réelle sensiblement au foyer F de l'objectif d'entrée (L$_1$, L$_2$), ce foyer F devant être situé en amont du réseau lenticulaire divergent 20. Il en résulte un astigmatisme qui, en l'espèce peut perturber la mise au point, en particulier pour des objets éloignés.

Pour le compenser, on peut disposer par exemple en aval de la pupille P$_2$ de l'objectif d'entrée, de préférence entre L$_1$ et L$_2$, une lentille cylindrique divergente 40 de longue focale, dont la génératrice est horizontale (et qui est donc croisée avec le réseau lenticulaire 20 disposé verticalement). Sa distance focale est calculée pour rapprocher et de préférence superposer le point de convergence pour des objets verticaux et le plan focal F du réseau divergent.

Pour des objets horizontaux, les rayons lumineux convergent au foyer F et une image virtuelle se forme au plan P. Pour des objets verticaux, la lentille cylindrique 51 croisée avec le réseau lenticulaire 20 a pour effet que leur image réelle se forme dans le plan P.

Une autre solution est de disposer un deuxième réseau lenticulaire convergent pratiquement dans le même plan que le premier, ayant la même focale que le premier, ou une focale calculée de sorte que les deux plans focaux se confondent, et dont le pas correspond à un pixel (sur le 1/4 du pas du premier réseau pour des pixels carrés et quatre points de vue). Les paramètres de pupille sont alors fixés.

D'autre part, le procédé de transfert selon l'invention convient pour tout type d'image autostéréoscopique, notamment les images de synthèse.

## Revendications

1. Dispositif de prise de vue autostéréoscopique à objectif d'entrée unique et mettant en oeuvre un réseau lenticulaire disposé sensiblement dans le plan focal image de l'objectif d'entrée de manière à former une image située dans le plan focal P du réseau lenticulaire et comportant successivement :

   a) ledit objectif d'entrée (L1, L2) présentant un seul axe optique,
   b) ledit réseau lenticulaire (20),
   c) une optique de reprise (L3, L4) de grossissement inférieur à l'unité,
   d) et un capteur d'images (22),

   caractérisé en ce que l'objectif d'entrée comporte une lentille d'entrée (L1) et une lentille de sortie (L2), en ce que ledit réseau lenticulaire (20) est cylindrique et est composé de lentilles élémentaires dont chacune présente une distance focale telle que, pour une surface image de largeur égale au pas (p) des lentilles qui composent le réseau, l'image de la pupille d'entrée de l'objectif d'entrée (L1, L2) formée à travers chacune des lentilles élémentaires ait une largeur nominale égale audit pas, et en ce que l'optique de reprise (L3, L4) renvoie les rayons émergeant du réseau lenticulaire (20) sur le capteur d'images (22), sans interposition d'un élément diffusant entre le réseau lenticulaire (20) et l'optique de reprise (L3, L4), l'image (21) du réseau lenticulaire (20) dans l'optique de reprise (L3, L4) étant telle que le pas (p) des lentilles du réseau lenticulaire (20) y correspond à un nombre entier de points images (pixels) du capteur d'images (22), et l'image de la pupille de l'objectif d'entrée étant, en l'absence du réseau lenticulaire 20, située sensiblement à la pupille de l'optique de reprise.

2. Dispositif selon la revendication 1, caractérisé en ce que le capteur d'images (22) est un capteur à couplage de charges.

3. Dispositif selon la revendication 2, caractérisé en ce que le capteur à couplage de charges est constitué par un ensemble de trois capteurs individuels (24, 25, 26) associés à une optique prismatique (23) de séparation trichrome formant sur les trois capteurs (24, 25, 26) des images nominalement alignées entre elles point image à point image.

4. Dispositif selon une des revendications précédentes, caractérisé en ce que le réseau lenticulaire (20) est orienté dans le sens des lignes du capteur d'images (22).

5. Dispositif selon une des revendications précédentes, caractérisé en ce que l'objectif (L1, L2) comporte une lentille d'entrée (L1) dont la pupille est sensiblement égale à 100 mm.

6. Dispositif selon une des revendications précédentes, caractérisé en ce que le réseau lenticulaire (20) présente un pas (p) de 0,4 mm.

7. Dispositif selon une des revendications précédentes, caractérisé en ce que l'optique de reprise (L3, L4) a un grossissement sensiblement égal à 0,1.

8. Dispositif selon une des revendications précédentes, caractérisé en ce que l'optique de reprise (L3, L4) présente un diaphragme circulaire, en particulier du type à iris.

9. Dispositif selon une des revendications précédentes, caractérisé en ce que l'objectif d'entrée (L1, L2) est télécentrique.

10. Dispositif selon une des revendications précédentes caractérisé en ce que l'optique de reprise ($L_3$, $L_4$) présente une lentille de champ ($L_3$) positionnée en aval du réseau lenticulaire (20) pour envoyer les rayons lumineux dudit réseau (20) vers un objectif ($L_4$) de reprise d'image.

11. Système vidéo autostéréoscopique, caractérisé en ce qu'il comporte un dispositif de prise de vue selon une des revendications précédentes et un module de transcodage comportant :

   - un module d'entrée (ME) présentant un convertisseur analogique-numérique (CAN) et un circuit de boucle à verrouillage de phase et d'extraction de synchronisation (BVP/SYN) ;
   - un module de commande (MC) comportant une interface opérateur (INT) ;
   - un microprocesseur (MP) ;
   - une banque de données (DB) ;
   - un module numérique (MD) comprenant un circuit (GSE) de génération de signaux d'adresse d'écriture, un circuit (GSL) de génération de signaux d'adresse de lecture, une mémoire ligne de transcodage (MLT), une mémoire pixel de transcodage (MPT), une première (MI1) et une deuxième (MI2) mémoires d'image constituant des plans image qui alternent lecture et écriture à la fin de chaque image en provenance du capteur d'images (22) du dispositif de prise de vue ;
   - un module de sortie comprenant un circuit (GSS) de génération de signaux de synchronisation de sortie, un convertisseur numérique-analogique CNA et/ou un module (DT) de génération d'images numériques vidéo sur un bus de sortie (DV).

12. Procédé de réglage d'un dispositif de prise de vue selon une des revendications précédentes produisant une image autostéréoscopique imbriquée, caractérisé en ce qu'il comporte les étapes suivantes :

   - réaliser par permutation de pixels et/ou de lignes une image transcodée d'une dite image autostéréoscopique imbriquée, une dite image transcodée comportant une pluralité d'images plates de format anamorphosé placées côte à côte, en nombre égal au nombre de points de vue stéréoscopiques,
   - positionner le réseau dans le dispositif de prise de vue à partir desdites images plates de format anamorphosé visualisées sur un récepteur, pour corriger au moins le grandissement de la projection du réseau lenticulaire (20) sur le capteur d'images (22).

13. Procédé selon la revendication 12, caractérisé en ce que l'étape de réglage comporte la mise en oeuvre d'un diaphragme pour occulter au moins un point de vue.

**Patentansprüche**

1. Einrichtung zur autostereoskopischen Aufnahme mit einem einzigen Eintrittsobjektiv und unter Verwendung eines Linsenrasters, das im wesentlichen in der Bildbrennpunktsebene des Eintrittsobjektivs derart angeordnet ist, daß ein sich in der Brennpunktsebene des Linsenrasters befindliches Bild gebildet wird, und aufeinanderfolgend enthaltend:

   a) das genannte Eintrittsobjektiv (L1, L2), das eine einzige optische Achse aufweist,
   b) das genannte Linsenraster (20),
   c) eine Wiederaufnahmeoptik (L3, L4) mit einer Vergrößerung, die kleiner als 1 ist,
   d) einen Bildaufnehmer (22),

dadurch **gekennzeichnet**, daß das Eintrittsobjektiv eine Eintrittslinse (L1) und eine Austrittslinse (L2) enthält, das das Linsenraster (20) zylindrisch und aus Elementarlinsen zusammengesetzt ist, von denen jede einen derartige Brennweite aufweist, daß für eine Bildfläche von einer Breite bzw. Weite, die gleich der Teilung (p) der Linsen ist, welche das Raster bilden, das Bild der Eintrittspupille des Eintrittsobjektivs (L1, L2), das durch jede der elementaren Linsen gebildet wird, eine nominelle Breite bzw. Weite hat, die gleich der genannten Teilung ist, und daß die Wiederaufnahmeoptik (L3, L4) die Strahlen, welche von dem Linsenraster (20) herkommen, auf den Bildaufnehmer (22) ohne Zwischenfügung eines zerstreuenden Elements zwischen das Linsenraster (20) und die Wiederaufnahmeoptik (L3, L4) wirft, wobei das Bild (21) des Linsenrasters (20) in der Wiederaufnahmeoptik (L3, L4) derart ist, daß die Teilung (p) der Linsen des Linsenrasters (20) darin einer ganzen Zahl von Bildpunkten (Pixeln) des Bildaufnehmers (22) entspricht, und sich das Bild der Pupille des Eintrittsobjektivs in Abwesenheit des Linsenrasters (20) im wesentlichen in bzw. an bzw. auf der Pupille der Wiederaufnahmeoptik befindet.

2. Einrichtung gemäß Anspruch 1, dadurch **gekennzeichnet**, daß der Bildaufnehmer (22) ein Aufnehmer mit Ladungskopplung ist.

3. Einrichtung gemäß Anspruch 2, dadurch **gekennzeichnet**, daß der Aufnehmer mit Ladungskopplung von einer Gesamtheit von drei einzelnen Aufnehmern (24, 25, 26) gebildet ist, die einer prismatischen Optik (23) für die Drei-Farben-Trennung zugeordnet sind, welche auf den drei Aufnehmern (24, 25, 26) Bilder, welche Bildpunkt zu Bildpunkt nominell untereinander ausgerichtet sind, bildet.

4. Einrichtung gemäß einem der vorhergehenden Ansprüche, dadurch **gekennzeichnet**, daß das Linsenraster (20) in der Richtung der Zeilen des Bildaufnehmers (22) orientiert bzw. ausgerichtet ist.

5. Einrichtung gemäß einem der vorhergehenden Ansprüche, dadurch **gekennzeichnet**, daß das Objektiv (L1, L2) eine Eintrittslinse (L1) enthält, deren Pupille im wesentlichen gleich 100 mm ist.

6. Einrichtung gemäß einem der vorhergehenden Ansprüche, dadurch **gekennzeichnet**, daß das Linsenraster eine Teilung (p) von 0,4 mm aufweist.

7. Einrichtung gemäß einem der vorhergehenden Ansprüche, dadurch **gekennzeichnet**, daß die Wiederaufnahmeoptik (L3, L4) eine Vergrößerung hat, die im wesentlichen gleich 0,1 ist.

8. Einrichtung gemäß einem der vorhergehenden Ansprüche, dadurch **gekennzeichnet**, daß die Wiederaufnahmeoptik (L3, L4) eine kreisförmige Blende, insbesondere vom Iristyp, aufweist,

9. Einrichtung gemäß einem der vorhergehenden Ansprüche, dadurch **gekennzeichnet**, daß das Eintrittsobjektiv (L1, L2) telezentrisch ist.

10. Einrichtung gemäß einem der vorhergehenden Ansprüche, dadurch **gekennzeichnet**, daß die Wiederaufnahmeoptik (L3, L4) eine Feldlinse (L3) aufweist, die hinter dem Linsenraster (20) positioniert ist, um die Lichtstrahlen des genannten Rasters (20) nach einem Objektiv (L4) für die Bildwiederaufnahme zu werfen.

11. Autostereoskopisches Videosystem, dadurch **gekennzeichnet**, daß es eine Einrichtung für die Aufnahme gemäß einem der vorhergehenden Ansprüche aufweist, und ein Codeumsetzungs- bzw. Transkodierungsmodul, enthaltend:

   - ein Eintrittsmodul (ME), das einen Analog-Digital-Umsetzer (CAN) und eine Schleifenschaltung mit Phasenverriegelung und Extraktion der Synchronisation (BVP/SYN);
   - ein Steuermodul (MC), das eine Operations- bzw. Bedienungsschnittstelle (INT) hat;
   - einen Mikroprozessor (MP);
   - eine Datenbank (DB) ;
   - ein Digitalmodul (MD), umfassend eine Schaltung (GSE) für die Erzeugung von Schreibadressensignalen, eine Schaltung (GSL) für die Erzeugung von Leseadressensignalen, einen Zeilenspeicher für die Codeumsetzung bzw. Transkodierung (MLT), einen Pixel- bzw. Bildpunktspeicher für die Transkodierung (MPT), einen ersten (MI1) und einen zweiten (MI2) Bildspeicher, welche Bildebenen bilden, die das Lesen und Schreiben am Ende jedes Bilds, das von dem Bildaufnehmer (22) der Einrichtung für die Aufnahme herkommt, wechseln;
   - ein Ausgangsmodul, umfassend eine Schaltung (GSS) für die Erzeugung von Ausgangssynchronisationssignalen, einen Digital-Analog-Umsetzer (CNA) und/oder ein Modul (DT) für die Erzeugung von digitalen Videobildern auf einem Ausgangsbus (DV).

12. Verfahren für die Steuerung bzw. Regelung einer Einrichtung für die Aufnahme gemäß einem der vorhergehenden Ansprüche, welche ein überlapptes bzw. verzahntes autostereoskopisches Bild erzeugt, dadurch **gekennzeichnet**, daß es die folgenden Schritte enthält:

   - Realisieren durch Permutation von Pixeln bzw. Bildpunkten und/oder von Zeilen eines transkodierten Bilds eines genannten überlappten bzw. verzahnten autostereoskopischen Bilds, eines genannten transkodierten Bilds, das eine Mehrzahl von flachen Bildern von anamorphosiertem Format enthält, die nebeneinander plaziert sind, und zwar in einer Anzahl, die gleich der stereoskopischen Sichtpunkte ist,

- Positionieren des Rasters in der Einrichtung für die Aufnahme, ausgehend von den genannten flachen Bildern von anamorphosiertem Format, die über einen Empfänger sichtbar gemacht werden, um wenigstens den Abbildungsmaßstab der Projektion des Linsenrasters (20) auf dem Bildaufnehmer (22) zu korrigieren.

13. Verfahren gemäß Anspruch 12, dadurch **gekennzeichnet**, daß der Schritt der Steuerung bzw. Regelung den Einsatz eines Diagramms zum Bedekken von wenigstens einem Sichtpunkt enthält.

**Claims**

1. An autostereoscopic filming device with a single objective input lens and employing a lenticular network disposed substantially in the image focal plane of the input objective lens in such a way as to form an image situated in the focal plane P of the lenticular network and comprising in succession:

   a) the said input objective lens (L1, L2) which has a single optical axis,
   b) the said lenticular network (20)
   c) an optical playback means (L3, L4) of an enlargement which is less than unity
   d) and an image sensor (22),

   characterised in that the input objective lens comprises an input lens (L1) and an output lens (L2), in that the said lenticular network (20) is cylindrical and is composed of elementary lenses each of which has a focal distance such that, for an image surface of a width equal to the pitch (p) of the lenses of which the network is composed, the image of the input pupil of the objective input lens (L1, L2) formed through each of the elementary lenses has a nominal width equal to the said pitch and in that the playback optical device (L3, L4) returns the rays emanating from the lenticular network (20) to the image sensor (22) with no interposed diffusing element between the lenticular network (20) and the playback optical device (L3, L4) being such that the pitch (p) of the lenses of the lenticular network (20) corresponds therein to a whole number of image points (pixels) of the input sensor (22) while, in the absence of the lenticular network (20), the image of the input objective pupil is situated substantially at the pupil of the playback optical device.

2. A device according to claim 1, characterised in that the image sensor (22) is a charge coupling sensor.

3. A device according to claim 2, characterised in that the charge coupling sensor is constituted by an assembly of three individual sensors (24, 25, 26) associated with a trichromic prismatic separating optical device (23) forming on the three sensors (24, 25, 26) images which are nominally aligned inter se between image point and image point.

4. A device according to one of the preceding claims, characterised in that the lenticular network (20) is orientated in the direction of the lines of the image sensor (22).

5. A device according to one of the preceding claims, characterised in that the objective lens (L1, L2) comprises an input lens (L1) the pupil of which is substantially equal to 100 m.

6. A device according to one of the preceding claims, characterised in that the lenticular network (20) has a pitch (p) of 0.4 mm.

7. A device according to one of the preceding claims, characterised in that the playback optical device (L3, L4) has an enlargement substantially equal to 0.1.

8. A device according to one of the preceding claims, characterised in that the playback optical device (L3, L4) comprises a circular diaphragm, particularly of the iris type.

9. A device according to one of the preceding claims, characterised in that the input objective lens (L1, L2) is telecentric.

10. A device according to one of the preceding claims, characterised in that the playback optical device (L3, L4) comprises a field lens (L3) positioned downstream of the lenticular network (20) to return the light rays from the network (20) to an image playback objective lens (L4).

11. An autostereoscopic video system characterised in that it comprises a filming device according to one of the preceding claims and a transcoding module comprising:

   - an input module (ME) having an analogue-numeric converter (ANC) and a phase lock and a synchronisation extraction (BVP/SYN) loop circuit;
   - a command module (CM) comprising an operator interface (INT);
   - a microprocessor (MP);
   - a data bank (DB);
   - a numeric module (MD) comprising a circuit (GSE) for generating writing address signals, a reading address signal generating circuit (GSL), a transcoding line memory (MLT), a transcoding pixel memory (MPT), a first (MI1) and second (MI2) image memory constituted image planes which alternate reading and writing at the end of each image from the image sensor (22) of the filming device;

- an output module comprising a circuit (GSS) for generating synchronising output signals, a numeric-analogue converter (ANC and/or a module (DT) for generating numeric video images on an output bus (DV).

12. A method of regulating a filming device according to one of the preceding claims, producing an imbricated autostereoscopic image, characterised in that it comprises the following stages:

- production of pixels and/or transcoded image lines by permutation from a so-called imbricated auto stereoscopic image, a so-called transcoded image comprising a plurality of flat images of anamorphosed format placed side by side, equal in number to the number of stereoscopic filming points,
- positioning the network in the filming device on the basis of the said flat images of anamorphosed visualised on a sensor to correct at least the enlargement of the projection of the lenticular network (20) on the image sensor (22).

13. A method according to claim 12, characterised in that the regulating stage comprises the use of a diaphragm for concealing at least one filming point.

FIG_1

FIG_2

FIG_3a

# FIG_3b

# FIG_3c

EP 0 697 160 B1

FIG_4

## FIG_5

CP
10bits

MPT

PTR
1bit

GSE

CL
10bits

| 0 | |
|---|---|
| TRAME1 | |
| 511 | |
| 512 | |
| TRAME2 | |
| 1023 | |

MLT

| 0 | 1023K |
|---|---|
| TRAME 1 | |
| 511K | |
| 512K | |
| TRAME 2 | |
| 1023K | |

MI1,MI2

## FIG_6

CP
10bits

MPT

PTR

GSE

CL
10bits

| 0 | |
|---|---|
| 511 | |
| 512 | |
| 1023 | |

MLT

| 0 | 1023K |
|---|---|
| 1023K | |

MI1,MI2

FIG_7

FIG_8

FIG_9

FIG_10

**FIG_11**

|  | adresse pixel | 0 | 1 | 2 | 3 | 185 | | | | 370 | | | | 555 | | | |
|---|---|---|---|---|---|---|---|---|---|---|---|---|---|---|---|---|---|
| adresse ligne | L/P | 1 | 2 | 3 | 4 | 186 | | | | 371 | | | | 556 | | | |
| Trame1 0 | 1 | 1 | 5 | 9 | 13 | 2 | 6 | 10 | 14 | 3 | 7 | 11 | 15 | 4 | 8 | 12 | 16 |
| " 2 512 | | 1 | 5 | 9 | 13 | 2 | 6 | 10 | 14 | 3 | 7 | 11 | 15 | 4 | 8 | 12 | 16 |
| " 1 | | 1 | 5 | 9 | 13 | 2 | 6 | 10 | 14 | 3 | 7 | 11 | 15 | 4 | 8 | 12 | 16 |
| " 2 513 | | 1 | 5 | 9 | 13 | 2 | 6 | 10 | 14 | 3 | 7 | 11 | 15 | 4 | 8 | 12 | 16 |
| " 1 | | 1 | 5 | 9 | 13 | 2 | 6 | 10 | 14 | 3 | 7 | 11 | 15 | 4 | 8 | 12 | 16 |
| " 2 514 | | 1 | 5 | 9 | 13 | 2 | 6 | 10 | 14 | 3 | 7 | 11 | 15 | 4 | 8 | 12 | 16 |
| " 1 | | 1 | 5 | 9 | 13 | 2 | 6 | 10 | 14 | 3 | 7 | 11 | 15 | 4 | 8 | 12 | 16 |
| " 2 515 | | 1 | 5 | 9 | 13 | 2 | 6 | 10 | 14 | 3 | 7 | 11 | 15 | 4 | 8 | 12 | 16 |
| " 1 | | 1 | 5 | 9 | 13 | 2 | 6 | 10 | 14 | 3 | 7 | 11 | 15 | 4 | 8 | 12 | 16 |

**FIG_13**

|  | adresse pixel | 1 | 2 | 3 | 4 | 5 | 6 | 7 | 8 | 9 | 10 |
|---|---|---|---|---|---|---|---|---|---|---|---|
| adresse ligne | L/P | | | | | | | | | | |
| 0 | 1 | ligne 1 | | | | | | | | | |
| 512 | 2 | ligne 5 | | | | | | | | | |
| 1 | 3 | " 9 | | | | | | | | | |
| 513 | 4 | " 13 | | | | | | | | | |
| 2 | 5 | " 17 | | | | | | | | | |
| 72 | 145 | " 2 | | | | | | | | | |
| 584 | 146 | " 6 | | | | | | | | | |
| 73 | | " 10 | | | | | | | | | |
| 585 | | " 14 | | | | | | | | | |
| 74 | | " 18 | | | | | | | | | |
| 144 | 289 | " 3 | | | | | | | | | |
| 656 | 290 | " 7 | | | | | | | | | |
| 145 | | " 11 | | | | | | | | | |
| 657 | | " 15 | | | | | | | | | |
| 146 | | " 19 | | | | | | | | | |
| 216 | 433 | " 4 | | | | | | | | | |
| 728 | 434 | " 8 | | | | | | | | | |
| 217 | | " 12 | | | | | | | | | |
| 729 | | " 16 | | | | | | | | | |
| 218 | | " 20 | | | | | | | | | |

# FIG_12

EP 0 697 160 B1

MPT — Plan écriture

| entrée | sortie | numéro pixel caméra | adresse | numéro pixel |
|--------|--------|---------------------|---------|--------------|
| 0 | 0 | 1 | 0 | 1 |
| 1 | 185 | 2 | 1 | 5 |
| 2 | 370 | 3 | 2 | 9 |
| 3 | 555 | 4 | 3 | 13 |
| 4 | 1 | 5 | | |
| 5 | 186 | 6 | 185 | 2 |
| 6 | 371 | 7 | 186 | 6 |
| 7 | 556 | 8 | 187 | 10 |
| 8 | 2 | 9 | 188 | 14 |
| 9 | 187 | 10 | | |
| 10 | 372 | 11 | 370 | 3 |
| 11 | 557 | 12 | 371 | 7 |
| 12 | 3 | 13 | 372 | 11 |
| 13 | 188 | 14 | 373 | 15 |
| 14 | 373 | 15 | | |
| 15 | 558 | 16 | 555 | 4 |
| | | | 556 | 8 |
| | | | 557 | 12 |
| | | | 558 | 16 |

# FIG_14

MLT — Plan écriture

| entrée | sortie | numéro ligne caméra | adresse | numéro ligne | |
|--------|--------|---------------------|---------|--------------|---|
| 0 | 0 | 1 | 0 | 1 | |
| 1 | 144 | 3 | 1 | 9 | |
| 2 | 512 | 5 | 72 | 2 | |
| 3 | 656 | 7 | 73 | 10 | TRAME 1 |
| 4 | 1 | 9 | 144 | 3 | |
| 5 | 145 | 11 | 145 | 11 | |
| 6 | 513 | 13 | 216 | 4 | |
| 7 | 657 | 15 | 217 | 12 | |
| 512 | 72 | 2 | 512 | 5 | |
| 513 | 216 | 4 | 513 | 13 | |
| 514 | 584 | 6 | 584 | 6 | TRAME 2 |
| 515 | 728 | 8 | 585 | 14 | |
| 516 | 73 | 10 | 656 | 7 | |
| 517 | 217 | 12 | 657 | 15 | |
| 518 | 585 | 14 | 728 | 8 | |
| 519 | 729 | 16 | 729 | 16 | |

TRAME 1 / TRAME 2

## FIG_19

| Trame | ligne (adresse ligne) | L | P | 0 1 2 3 4 5 6 7 8 9 10 11 / 1 2 3 4 5 6 7 8 9 10 11 12 |
|---|---|---|---|---|
| 1 | 0 | 1 | 1 | ligne 4 |
| 2 | 512 | 2 | 2 | " 3 |
| 1 | 2 | 3 | 1 | " 2 |
| 2 | 513 | 4 | 2 | " 1 |
| | 4 | 5 | | " 8 |
| | 514 | 6 | | " 7 |
| | 6 | 7 | | " 6 |
| | 515 | 8 | | " 5 |
| | 8 | 9 | | " 12 |
| | 516 | 10 | | |

## FIG_21

| Trame | ligne (adresse ligne) | L | P | 0 1 2 3 4 5 6 7 8 9 10 11 / 1 2 3 4 5 6 7 8 9 10 11 12 |
|---|---|---|---|---|
| 1 | 0 | 1 | 1 | ligne 4 |
| | 1 | 2 | 2 | " 3 |
| | 2 | 3 | 3 | " 2 |
| | 3 | 4 | 4 | " 1 |
| | 4 | 5 | 5 | " 8 |
| 2 | 5 | 6 | 6 | " 7 |
| | 6 | 7 | 7 | " 6 |
| | 7 | 8 | 8 | " 5 |
| | 8 | 9 | 9 | " 12 |
| | 9 | 10 | 10 | " 11 |

## FIG_15

| adresse ligne | L | P | 0 1 2 3 4 5 |
|---|---|---|---|
| 0 | 1 | | ligne 1 |
| 1 | 2 | | " 5 |
| 2 | 3 | | " 9 |
| 3 | 4 | | " 13 |
| 4 | 5 | | " 17 |
| 144 | 145 | | " 2 |
| | | | " 6 |
| | | | " 10 |
| | | | " 14 |
| | | | " 18 |
| 288 | 289 | | " 3 |
| | | | " 7 |
| | | | " 11 |
| | | | " 15 |
| | | | " 19 |
| 432 | 433 | | " 4 |
| | | | " 8 |
| | | | " 12 |
| | | | " 16 |
| | | | " 20 |

29

## FIG_16

MLT — entrée / sortie

PLAN ECRITURE — numéro caméra / adresse / numéro ligne

| entrée | sortie | numéro caméra | adresse | numéro ligne |
|--------|--------|---------------|---------|--------------|
| 0 | 0 | 1 | 0 | 1 |
| 1 | 288 | 3 | 1 | 5 |
| 2 | 1 | 5 | 2 | 9 |
| 3 | 289 | 7 | 3 | 13 |
| 4 | 2 | 9 | 144 | 2 |
| 5 | 290 | 11 | 145 | 6 |
| 6 | 3 | 13 | 146 | 10 |
| 7 | 291 | 15 | 147 | 14 |
| 512 | 144 | 2 | 288 | 3 |
| 513 | 432 | 4 | 289 | 7 |
| 514 | 145 | 6 | 290 | 11 |
| 515 | 433 | 8 | 291 | 15 |
| 516 | 146 | 10 | 432 | 4 |
| 517 | 434 | 12 | 433 | 8 |
| 518 | 147 | 14 | 434 | 12 |
| 519 | 435 | 16 | 435 | 16 |

Trame 1 (entrées 0–7), Trame 2 (entrées 512–519)

## FIG_17

| Adresse pixel | 0 | 1 | 2 | 3 | 4 | 5 | 6 | 7 | 8 | 9 | 10 | 11 |
|---|---|---|---|---|---|---|---|---|---|---|---|---|
| Adresse ligne / P | 1 | 2 | 3 | 4 | 5 | 6 | 7 | 8 | 9 | 10 | 11 | 12 |
| Trame 1 — 0 / L=1 | 4 | 3 | 2 | 1 | 8 | 7 | 6 | 5 | 12 | 11 | 13 | 14 |
| Trame2 512 / 2 | | | | | | | | | | | | |
| Trame1 1 / 3 | | | | | | | | | | | | |
| Trame2 513 / 4 | | | | | | | | | | | | |

## FIG_18

MPT — entrée / sortie

PLAN ECRITURE — numéro pixel camera / adresse / numéro pixel

| entrée | sortie | numéro pixel camera | adresse | numéro pixel |
|--------|--------|---------------------|---------|--------------|
| 0 | 3 | 1 | 0 | 4 |
| 1 | 7 | 5 | 1 | 3 |
| 2 | 11 | 9 | 2 | 2 |
| 3 | 15 | 13 | 3 | 1 |
| 185 | 2 | 2 | 4 | 8 |
| 186 | 6 | 6 | 5 | 7 |
| 187 | 10 | 10 | 6 | 6 |
| 188 | 14 | 14 | 7 | 5 |
| 370 | 1 | 3 | 8 | 12 |
| 371 | 5 | 7 | 9 | 11 |
| 372 | 9 | 11 | 10 | 10 |
| 373 | 13 | 15 | 11 | 9 |
| 555 | 0 | 4 | 12 | 16 |
| 556 | 4 | 8 | 13 | 15 |
| 557 | 8 | 12 | 14 | 14 |
| 558 | 12 | 16 | 15 | 13 |

IP1 (0–3), IP2 (185–188), IP3 (370–373), IP4 (555–558)

EP 0 697 160 B1

FIG_20

FIG_22

EP 0 697 160 B1

# FIG_23

colonne pixel n°1  colonne pixel n°2  colonne pixel n°3  colonne pixel n°4  colonne pixel n°768

← ligne n°281

101

101    111    121    131

← ligne n°3
← ligne n°2
← ligne n°1

100  102  110  112  120  121  130  131
101       111       122       132
200

# FIG_24

colonne pixel n°1  colonne pixel n°2  colonne pixel n°3  colonne pixel n°4  colonne pixel n°768

← ligne n°28

← ligne n°3
← ligne n°2
← ligne n°1

100    101   110   111  120  121    130   131 TP

200

FIG_25a

FIG_25b

FIG_26

FIG_28

FIG_27